# EUROPEAN PATENT APPLICATION

(11) **EP 4 656 948 A1**
(43) Date of publication of application: **03.12.2025**
(21) Application number: 25178453.4
(22) Date of filing: 23.05.2025
(51) Int. Cl.: F24C 7/08, F24C 15/20, F24C 15/00, G06F 3/16, G10L 15/22, H05B 6/64, F24C 15/02

(54) **COOKING APPLIANCE WITH DIGITAL CONTROLLER DOOR AND METHOD FOR ENHANCING VOICE RECOGNITION PERFORMANCE**

(30) Priority: 30.05.2024 KR 20240070766; 16.12.2024 KR 20240187293
(71) Applicant: LG Electronics Inc., Yeongdeungpo-gu Seoul 07336 (KR)
(72) Inventor: KIM, Dong Hun, 07796 Seoul (KR); KIM, Young Jin, 07796 Seoul (KR); KIM, Jeongkil, 07796 Seoul (KR); JANG, Junhwan, 07796 Seoul (KR); KWON, Geon, 07796 Seoul (KR); LEE, Hansu, 07796 Seoul (KR)
(74) Representative: Vossius & Partner Patentanwälte Rechtsanwälte mbB

(57) **Abstract**

Disclosed are a cooking appliance including a digital controller door and a method for enhancing voice recognition performance, and the cooking appliance includes: a functional unit configured to provide a cooking function, wherein the digital controller door includes a microphone for receiving a user's voice, wherein in response to that the microphone has received a wake-up word, a controller is configured to perform a command word recognition mode to receive a command word for a preset time duration.

## Description

The present invention relates to a cooking appliance including a digital controller door and a method for enhancing voice recognition performance.

### Description of Related Art

A cooking appliance is a home appliance that cooks food using microwaves belonging to electromagnetic waves and/or heater heat. The cooking appliance may be generally provided with a cavity as a space in which food is placed and cooked, and a door for opening and closing the cavity.

When the cooking appliance is installed indoors, it is necessary to consider efficient use of the cooking appliance, saving of an installation space thereof, etc.

For this reason, the cooking appliance may be disposed at a position adjacent to a heating cooking device, for example, a heating oven, a gas stove, etc. Specifically, the cooking appliance may be disposed on top of the heating cooking device.

When the cooking appliance is disposed on top of the heating cooking device, the user may conveniently cook food by reducing the movement of the user in an environment in which the cooking appliance and the heating cooking device are adjacent to each other. In addition, heat, oil vapor, etc. as generated from the heating cooking device may be discharged to the outside using the cooking appliance as a hood.

In a state in which the cooking appliance is disposed on top of the heating cooking device, heat, oil vapor, or the like generated from the heating cooking device disposed under the cooking appliance may adversely affect the operation of the cooking appliance.

For example, a display may be mounted on a front surface of a door provided in the cooking appliance and may be configured to provide various information to the user. The user may know a cooking state of the cooked food through the display.

In addition, when the display is connected to another home appliance so as to serve as a hub of the home appliances, information other than cooking food may be obtained through the display. In addition, the user may input a command necessary for cooking and various other commands to the display in a touch manner.

In a state in which the cooking appliance is disposed on top of the heating cooking device, heat, oil vapor, etc. generated from the heating cooking device may invade into parts mounted on the display and the door.

It is necessary to suppress damage to or malfunction of the display of the cooking appliance and other components mounted on the door due to such heat, oil vapor, or the like.

In addition, the cooking appliance may include a predetermined fan to discharge the smoke generated in the heating cooking device to the outside. Further, the cooking appliance may provide a voice recognition function, and noise generated by the cooking appliance may interfere with the performance of the voice recognition function. Therefore, it is necessary to solve these problems.

The present invention is specified by the independent claims. Preferred embodiments are defined by the dependent claims. The present invention has been devised to solve the above problem. A purpose of the present invention is to provide a cooking appliance in which various software or hardware of a door coupled to the cooking appliance cooperates smoothly with a control component for controlling the cooking appliance, and a scheme capable of contextually controlling components of the cooking appliance so that the cooking appliance may accurately recognize a voice in performing voice recognition is realized.

Further, a purpose of the present invention is to provide a scheme for enhancing voice recognition performance in which an operation of each of some components that generate noise is controlled in the voice recognition process.

Furthermore, a purpose of the present invention is to provide a scheme for enhancing voice recognition performance by stopping the generation of noise or reducing the noise based on a voice recognition pattern.

Purposes according to the present invention are not limited to the above-mentioned purpose. Other purposes and advantages according to the present invention that are not mentioned may be understood based on following descriptions, and may be more clearly understood based on embodiments according to the present invention. Further, it will be easily understood that the purposes and advantages according to the present invention may be realized using means shown in the claims or combinations thereof.

A cooking appliance including a digital controller door according to an embodiment of the present invention includes: a functional unit configured to provide a cooking function, wherein the digital controller door includes a microphone for receiving a user's voice, wherein in response to that the microphone has received a wake-up word, a controller is configured to perform a command word recognition mode to receive a command word for a preset time duration. The controller may be used for controlling a plurality of components of the cooking appliance.

The controller may be configured to adjust an operation level of a ventilation fan included in the functional unit in the command word recognition mode.

The controller may be configured to determine an operation level to which a current operation level of the ventilation fan is allowed to be changed, and an operation time duration to which a current operation time duration thereof is allowed to be changed, based on an operating state of the functional unit. The controller may be configured to change the current operation level of the ventilation fan to the determined level and operate the ventilation fan at the determined level for the determined operation time duration.

The controller may be configured to adjust an operation level of a door fan included in the digital controller door in the command word recognition mode.

The controller may be configured to determine an operation level to which a current operation level of the door fan is allowed to be changed, and an operation time duration to which a current operation time duration thereof is allowed to be changed, based on an operating state of the digital controller door. The controller may be configured to change the current operation level of the door fan to the determined level and operate the ventilation fan at the determined level for the determined operation time duration.

The command word recognition mode may be performed based on a reference volume for a sound output unit included in the cooking appliance. The controller may be configured to lower the reference volume, based on a volume and/or a frequency band of voice data including the wake-up word or the command word.

The controller may be configured to lower a reference door fan operation level or a reference ventilation fan operation level, based on a volume and/or a frequency band of voice data including the wake-up word or the command word.

The controller may be configured to perform a command word recognition enhancement mode in response to that the command word is not recognized within the preset time duration, and subsequently, the wake-up word is input within the preset time duration.

A noise level generated by the cooking appliance in the command word recognition mode may be greater than a noise level generated by the cooking appliance in the command word recognition enhancement mode.

A method for controlling a cooking appliance including a digital controller door according to an embodiment of the present invention is provided. The cooking appliance comprising: a functional unit configured to provide a cooking function, wherein the digital controller door includes a microphone for receiving a user's voice, wherein the method includes: receiving, by the microphone, a wake-up word, and performing, by a controller, a command word recognition mode to receive a command word for a preset time duration, thereby improving voice recognition performance. The controller may be used for controlling a plurality of components of the cooking appliance.
The performing of the command word recognition mode may include adjusting, by the controller, an operation level of a ventilation fan included in the functional unit in the command word recognition mode.

The adjusting of the operation level may include determining, by the controller, an operation level to which a current operation level of the ventilation fan is allowed to be changed, and an operation time duration to which a current operation time duration thereof is allowed to be changed, based on an operating state of the functional unit. The adjusting of the operation level may include changing, by the controller, the current operation level of the ventilation fan to the determined level and operating, by the controller, the ventilation fan at the determined level for the determined operation time duration.

The performing of the command word recognition mode may include adjusting, by the controller, an operation level of a door fan included in the digital controller door in the command word recognition mode.

The adjusting of the operation level may include determining, by the controller, an operation level to which a current operation level of the door fan is allowed to be changed, and an operation time duration to which a current operation time duration thereof is allowed to be changed, based on an operating state of the digital controller door. The adjusting of the operation level may include changing, by the controller, the current operation level of the door fan to the determined level and operating, by the controller, the ventilation fan (590) at the determined level for the determined operation time duration.

The command word recognition mode may be performed based on a reference volume for a sound output unit included in the cooking appliance. The performing of the command word recognition mode may include lowering, by the controller, the reference volume, based on a volume and/or a frequency band of voice data including the wake-up word or the command word.

The method may further comprise in response to that the command word is not recognized within the preset time duration, and subsequently, the wake-up word is input within the preset time duration, performing, by the controller, a command word recognition enhancement mode. A noise level generated by the cooking appliance in the command word recognition mode may be greater than a noise level generated by the cooking appliance (1000) in the command word recognition enhancement mode.

A cooking appliance according to an embodiment of the present invention includes: a functional unit including a cavity for receiving food, and one or more functional components, the functional unit being configured to provide a cooking function, a digital controller door coupled to the functional unit, the digital controller door including a display configured to provide a user interface, and one or more door-mounted components including a microphone and a controller configured to in response to receiving a wake-up word, execute a command word recognition mode for receiving a command word for a predetermined amount of time, wherein the command word recognition mode includes adjusting an operation level of at least component among of the one or more functional components of the functional unit or the one or more door-mounted components of the digital controller door.

A method of controlling a cooking appliance according to an embodiment of the present invention includes: displaying a user interface by a display of a digital controller door coupled to a functional unit of the cooking appliance, the functional unit including a cavity for receiving food and one or more functional components, and the digital controller door including one or more door-mounted components including a microphone; and in response to receiving a wake-up word, executing, by a controller of the cooking appliance, a command word recognition mode for receiving a command word for a predetermined amount of time, wherein the command word recognition mode includes adjusting an operation level of at least component among of the one or more functional components of the functional unit or the one or more door-mounted components of the digital controller door.

In accordance with the present invention, the various software or hardware of the door coupled to the cooking appliance cooperates smoothly with the control component for controlling the cooking appliance. A scheme capable of contextually controlling components of the cooking appliance so that the cooking appliance may accurately recognize a voice in performing voice recognition may be realized.

Further, in accordance with the present invention, the operation of each of some components that generate noise is controlled in the voice recognition process. Furthermore, a scheme of stopping the generation of noise or reducing the noise based on a voice recognition pattern may be realized. In this way, the human interface of the cooking appliance may accurately operate.

The effects of the present invention are not limited to the above-described effects, and those skilled in the art may easily derive various effects of the present invention from the configuration of the present invention.
FIG. 1 is a conceptual diagram of a cooking appliance including a digital controller door according to an embodiment of the present invention.
FIG. 2 is a diagram illustrating components of a digital controller door and components of a functional unit according to an embodiment of the present invention.
FIG. 3 is a diagram illustrating categories of functions performed by an OS controller and a function controller according to an embodiment of the present invention.
FIG. 4 is a perspective view illustrating a cooking appliance according to an embodiment of the present invention.
FIG. 5 is a diagram illustrating a state in which the digital controller door 100 is opened in FIG. 4.
FIG. 6 is a perspective view illustrating a digital controller door of a cooking appliance according to an embodiment of the present invention.
FIG. 7 is a schematic view illustrating a position where a cooking appliance is disposed according to an embodiment of the present invention.
FIG. 8 is a diagram illustrating a process in which a cooking appliance recognizes a wake-up word and a command word according to an embodiment of the present invention.
FIG. 9 is a diagram illustrating a process of controlling an operation of a ventilation fan or a door fan in a command word recognition mode according to an embodiment of the present invention.
FIG. 10 is a diagram illustrating a process in which an OS controller adjusts a reference volume used in a command word recognition mode according to an embodiment of the present invention.
FIG. 11 is a diagram illustrating a process in which an OS controller adjusts a reference door fan operation level used in a command word recognition mode according to an embodiment of the present invention.
FIG. 12 is a diagram illustrating a process in which an OS controller adjusts a reference ventilation fan operation level used in a command word recognition mode according to an embodiment of the present invention.
FIG. 13 is a diagram illustrating a process in which an OS controller performs a command word recognition enhancement mode on repeated input of a wake-up word according to an embodiment of the present invention.
FIG. 14 is a diagram illustrating a process in which a cooking appliance including a digital controller door performs voice recognition according to another embodiment of the present invention.
FIG. 15 is a diagram illustrating a process of adjusting an operation level of a ventilation fan in a command word recognition mode according to an embodiment of the present invention.
FIG. 16 is a diagram illustrating a process of adjusting an operation level of a door fan in a command word recognition mode according to an embodiment of the present invention.
FIG. 17 is a view illustrating a process of controlling an operation level of a door fan/ventilation fan according to an embodiment of the present invention.

Hereinafter, embodiments of the present invention will be described in detail with reference to the drawings so that those skilled in the art to which the present invention pertains can easily implement the present invention. The present invention may be implemented in several different forms and is not limited to the embodiments described herein.

In order to clearly describe the present invention, parts irrelevant to the description are omitted, and the same reference numerals refer to the same or similar components throughout the disclosure. Further, some embodiments of the present invention will be described in detail with reference to the example drawings. In adding reference numerals to the components of each drawing, the same components may be denoted by the same reference numerals as much as possible even though the components are shown in different drawings. In addition, in describing the present invention, when it is determined that a detailed description of related known components or functions may obscure the gist of the present invention, the detailed description thereof may be omitted.

It will be understood that, although the terms "first", "second", "third", and so on may be used herein to describe various elements, components, areas, layers and/or units, these elements, components, areas, layers and/or units should not be limited by these terms. These terms are used to distinguish one element, component, area, layer or unit from another element, component, area, layer or unit. Thus, a first element, component, area, layer or unit as described under could be termed a second element, component, area, layer or unit, without departing from the scope of the present invention. It will be understood that when a first element or layer is referred to as being "connected to", "jointed to" or "coupled to" a second element or layer, the first element may be directly connected to or jointed to or coupled to the second element or layer, or one or more intervening elements or layers may be present therebetween. In addition, it will also be understood that when an element or layer is referred to as being "between" two elements or layers, it may be the only element or layer between the two elements or layers, or one or more intervening elements or layers may also be present therebetween.

In addition, in the implementation of the present invention, the component may be subdivided for convenience of description. However, this component may be implemented in one device or module, or one component may be implemented so as to be distributed into a plurality of devices or modules.

The present invention relates to a technique for controlling a cooking appliance using a digital controller door disposed at a front surface of the cooking appliance.

According to the present invention, a door of a microwave oven disposed on an oven or a gas stove includes a LCD or OLED screen. An Android of the LCD or OLED screen and a microcomputer of the microwave oven cooperate with each other. A LCD or OLED component operates according to various operating/external environments of the microwave oven or controls a specific function of the microwave oven.

The digital controller door of the present invention may be combined with the cooking appliance to open and close the inside of the cooking appliance. An embodiment of the cooking appliance of the present invention is a microwave oven. However, embodiments of the present invention is not limited thereto. An embodiment of the cooking appliance including the digital controller door of the present invention includes each of various cooking appliances which includes a door equipped with a display such as a LCD providing various user interfaces such as a touch screen, and is capable of storing and cooking food therein. Embodiments of the present invention is not limited o a specific display panel type.

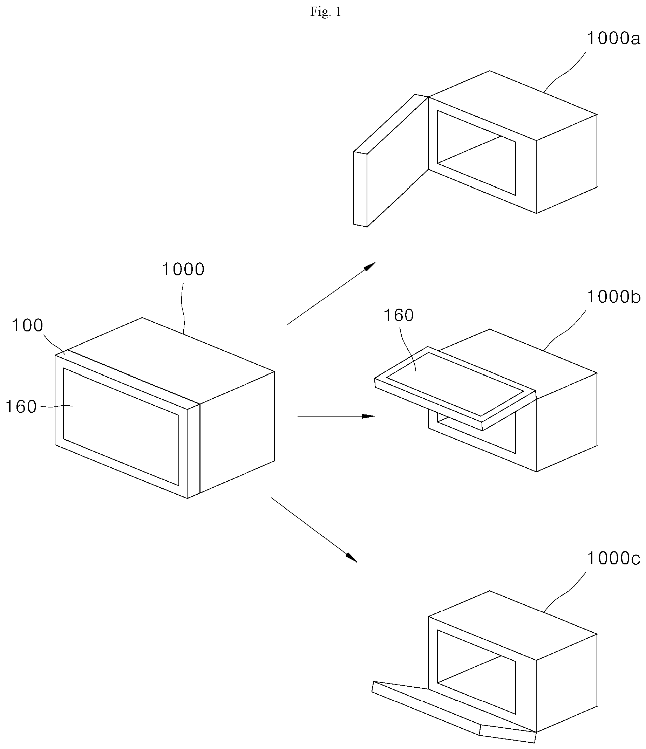

FIG. 1 is a conceptual diagram of a cooking appliance including a digital controller door according to an embodiment of the present invention.

The cooking appliance 1000 includes a digital controller door 100 at a front surface thereof. The digital controller door 100 includes one or two or more displays, and the display of the digital controller door 100 may display information about the inside of the cooking appliance 1000 or information related to an operation thereof to the user. The display of the digital controller door 100 may provide a touch input interface for receiving a predetermined command from the user.

A manner in which the digital controller door 100 is opened includes an embodiment 1000a, 1000b, or 1000c. 1000a shows an embodiment in which the digital controller door 100 pivots around a left side of the cooking appliance 1000a to open the right side of the cooking appliance 1000a, and open the inside of the cooking appliance 1000a. 1000b shows an embodiment in which the digital controller door 100 pivots around a top side of the cooking appliance 1000b to open the bottom side of the cooking appliance 1000b, and open the inside of the cooking appliance 1000b. 1000c shows an embodiment in which the digital controller door 100 pivots around a bottom side of the cooking appliance 1000c to open the top side of the cooking appliance 1000c, and open the inside of the cooking appliance 1000c.

A display 160 may be mounted on the front surface of the digital controller door 100 to provide various information to a user. The user may know the cooking state of the cooked food on the display 160. The display 160 may be embodied as a LCD. However, embodiments of the present invention is not limited thereto, and the display 160 may include various display panels. In addition, a touch panel for touch input may be coupled to the display 160.

The digital controller door 100 controls the operation of the cooking appliance 1000 and outputs various information. The cooking appliance 1000 performs cooking using microwaves or heater heat. Accordingly, a digital controlling function provided by the digital controller door 100 and a cooking function of the cooking appliance 1000 are provided in different ways and in different areas.

The digital controller door 100 of the present invention may serve as a kind of a hub. That is, the digital controller door 100 may serve as a hub of another home appliance and display information transmitted from another home appliance on the display 160. In this process, the user may obtain other information other than the cooking food on the display 160. In addition, the user may input a command necessary for cooking and various other commands to the display 160 in a touch manner.

To this end, in accordance with the present invention, a method and a configuration in which the digital controller door 100 and the cooking appliance 1000 respectively include independent control components, and these control components cooperate with each other to control the function of the cooking appliance will be described.

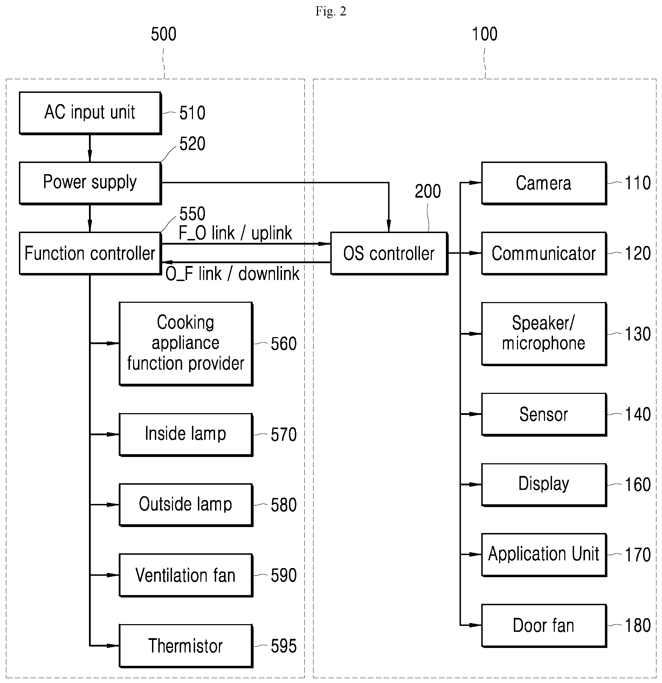

FIG. 2 is a diagram illustrating components of a digital controller door and components of a functional unit according to an embodiment of the present invention. Each of the components is conceptually disposed and is not limited to a specific physical location or material.

The digital controller door 100 may operate as an Internet-of-things hub. The digital controller door 100 may include an OS controller 200. In addition, the digital controller door 100 may include a camera 110. In addition, the digital controller door 100 may include a communicator 120. In addition, the digital controller door 100 may include a speaker/microphone 130. In addition, the digital controller door 100 may include a sensor 140. In addition, the digital controller door 100 may include the display 160. In addition, the digital controller door 100 may include an application unit 170. In addition, the digital controller door 100 may include a door fan 180. The door fan may be embodied as a direct current (DC) fan and cools the heat of the digital controller door 100. In particular, the door fan 180 cools heat generated from the display 160.

Hereinafter, the OS controller 200, the camera 110, the communicator 120, the speaker/microphone 130, the sensor 140, the display 160, the application unit 170, and the door fan 180 are referred to as elements or components of the digital controller door 100

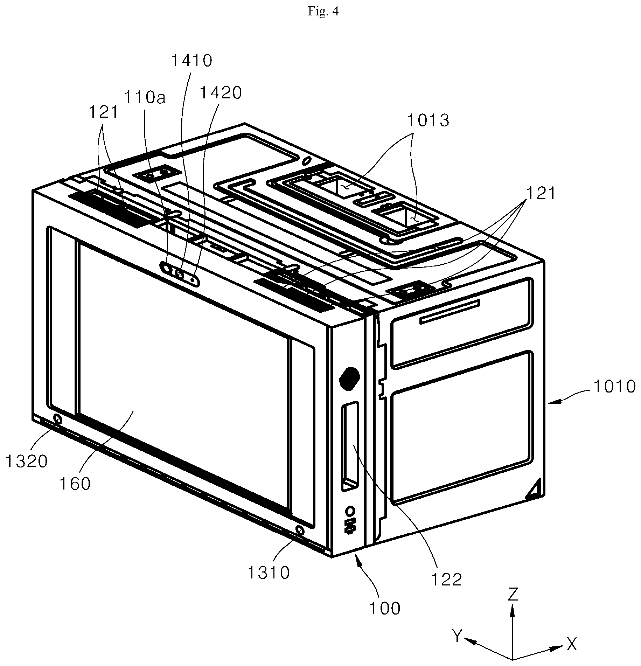

The functional unit 500 includes an AC input unit 510, a power supply 520, a function controller 550, a cooking appliance function provider 560, an inside lamp 570, an outside lamp 580, a ventilation fan (vent fan) 590, etc. The functional unit 500 and the digital controller door 100 are logically configured for the description of the present invention. The functional unit 500 may be implemented as a body 1010 illustrated in FIG. 4. Accordingly, the functional unit 500 may further include various physical components necessary for implementation as the body 1010 in addition to the components illustrated in FIG. 2.

The OS controller 200 controls various components of the digital controller door 100.

In addition, the OS controller 200 transmits a predetermined signal to the function controller 550, and allows the function controller 550 to control the performance of a specific function of the cooking appliance 1000. In addition, the function controller 550 may transmit a signal to the OS controller 200. This allows the function controller 550 to inform the OS controller 200 of a result related to the performance of a specific function of the cooking appliance 1000. The OS controller 200 may operate based on a specific OS (e.g., Android).

According to an embodiment, the function controller 550 and the OS controller 200 may operate independently and may communicate a predetermined signal with each other when there is information to be notified to each other. A type of signal may be based on various communication protocols such as wired communication or wireless communication. According to an embodiment, when the OS controller 200 receives information from the user and is instructed to perform a specific function of the cooking appliance, the OS controller 200 may transmit a specific signal to the function controller 550. In this case, the function controller 550 operates the functional unit 500, for example, the body 1010.

The function controller 550 may be embodied as a microcomputer for generating a signal for operating the functional unit 500, for example, the body 1010.

The camera 110 may be disposed on the digital controller door to photograph the outside of the cooking appliance 1000, photograph the surroundings, or photograph a cooking space inside the cooking appliance 1000.

In addition, the camera 110 may be disposed inside the digital controller door 100. The camera 110 may photograph the inside of the cooking appliance 1000 to allow the user to check the cooking state of the food stored therein.

Accordingly, the camera 110 may be disposed to face outwardly of the digital controller door 100 (toward the user) and to face inwardly of the digital controller door 100 (toward the inside of the cooking appliance). In this case, the display 160 may output an image obtained by photographing the outside out of the cooking appliance or the inside of the cooking appliance based on the cooking state or a state of the function performed by the digital controller door 100.

The communicator 120 may perform various types of wired or wireless communication functions. The communicator may communicate with another device (e.g., an external server, a hub disposed in a home, or another home appliance) using a communication protocol such as Wi-Fi, Bluetooth, or the like.

The speaker/microphone 130 may generate a voice, an alarm sound, etc. necessary for the operation of the cooking appliance 1000, and may receive a predetermined external voice command or an external sound. The speaker/microphone 130 may be integral with each other or may be disposed at different positions.

The sensor 140 senses an environment outside or inside the cooking appliance 1000. For example, the sensor 140 may include a temperature sensor, an illuminance sensor, a human sensor, a humidity sensor, etc.

The display 160 outputs visual information to be provided to a user. The information provided from the display 160 includes a cooking function or state of the cooking appliance 1000 in operation, an interface for controlling the cooking appliance 1000, and information on a surrounding environment in which the cooking appliance 1000 is disposed.

In addition, when the digital controller door 100 operates as an Internet-of-things hub, the display 160 may display various information in addition to cooking related information. In addition, the display 160 may convert a user's touch into an input signal.

The application unit 170 stores therein various application programs as executed by the digital controller door 100, and the OS controller 200 may execute the application programs stored in the application unit 170 and may display the execution results on the display 160.

The door fan 180 embodied as the direct current fan is configured to cool heat generated in various electronic devices related to a digital controller door. The door fan 180 may cool the heat generated from the display 160 or the OS controller 200.

The OS controller 200 may download various application programs through the communicator 120 and store and install the application programs in the application unit 170.

The application program according to an embodiment of the present invention includes an application program directly or indirectly related to the operation or function of the cooking appliance 1000, such as an application program for controlling the cooking of the cooking appliance 1000, an application program related to an image or a video to be displayed during the operation of the cooking appliance 1000, etc. In this case, the OS controller 200 may control a function of the cooking appliance 1000 by controlling the function controller 550 using the application program.

In addition, the application program according to an embodiment of the present invention includes an application program necessary for the digital controller door 100 to operate as the Internet of Things hub.

The AC input unit 510 constituting the functional unit 500 receives power required for the cooking appliance 1000 to operate. The supplied power is provided to the function controller 550 and the OS controller 200 through the power supply 520.

The function controller 550 controls the functions of the cooking appliance 1000. In this regard, the function controller 550 receives a signal from the OS controller 200 and controls the functions of the cooking appliance 1000. The function controller 550 may control an operation of each of the cooking appliance function provider 560, the inside lamp 570, the outside lamp 580, the ventilation fan (Vent Fan) 590, and the thermistor 595 according to the signal received from the OS controller 200. Hereinafter, the cooking appliance function provider 560, the inside lamp 570, the outside lamp 580, the ventilation fan 590, and the thermistor 595 are referred to as elements or components of the functional unit 500.

The cooking appliance function provider 560 generates microwaves or heater heat to cook food stored in the cooking appliance 1000.

The inside lamp 570 is disposed inside the cooking appliance 1000 that is opened and closed by the digital controller door 100. When the digital controller door 100 is opened or closed, the inside lamp 570 may be turned on and off. Alternatively, when the cooking appliance 1000 is cooking the food, the inside lamp 570 may be turned on so that the internal camera may capture an image thereof.

The outside lamp 580 is disposed at a lower end or an upper end of the cooking appliance 1000. When the cooking appliance 1000 is disposed on top of a separate cooktop, the outside lamp 580 may be disposed at a lower end of the cooking appliance 1000.

The ventilation fan 590 discharges heat generated from the cooktop to the outside.

The thermistor 595 is a component disposed in the functional unit 500 to sense a temperature. One or more thermistors 595 may be disposed at the cooking appliance 1000.

According to an embodiment of the present invention, the thermistor 595 may provide information on the sensed temperature to the function controller 550. According to another embodiment of the present invention, the thermistor 595 may be included in the sensor 140, and in this case, information on the sensed temperature may be provided to the OS controller 200 that controls the sensor 140.

The food stored in the cooking appliance 1000 is cooked via the operation of the cooking appliance function provider 560. Even in this process, the function controller 550 and the OS controller 200 may communicate information with each other per a preset time interval.

The OS controller 200 provides a UI/UX function. In addition, the OS controller 200 transmits a predetermined signal to the function controller 550, and the function controller 550 controls the operation of the cooking appliance 1000, for example, the body 1010 or the functional unit 500. In addition, the function controller 550 may control an operation of the cooking appliance function provider 560 and provide an information value generated therefrom during control to the OS controller 200.

Accordingly, the control flow of the OS controller 200 and the function controller 550 is configured such that the OS controller 200 transmits a predetermined signal to the function controller 550 and then receives a predetermined control result from the function controller 550.

The OS controller 200 and the function controller 550 may communicate with each other in a wired or wireless manner. The OS controller 200 and the function controller 550 may communicate with each other using various communication protocols, and embodiments of the present invention are not limited to a specific communication protocol.

As illustrated in FIG. 2, a communication link via which the function controller 550 transmits predetermined data to the OS controller 200 or performs control is referred to as a F_O link or an uplink. A communication link via which the OS controller 200 transmits predetermined data to the function controller 550 or performs control is referred to as an O_F link or a downlink. However, embodiments of the present invention are not limited to a specific name or a direction such as upward/downward, and the links may be distinguished from each other based on a direction of data transmission between the components 550 and 200.

In an embodiment of the present invention, the link may physically use one or more lines or may use one or more communication media. In addition, in accordance with the present invention, a name is separately given to each data transmission direction in order to distinguish logically the data transmission directions from each other.

According to an embodiment of the present invention, in the case of the wired communication, the OS controller 200 and the function controller 550 may communicate with each other using a communication protocol such as Universal asynchronous receiver/transmitter (UART) and Universal Serial Bus (USB).

According to an embodiment of the present invention, in the case of the wireless communication, the OS controller 200 and the function controller 550 may communicate with each other using a communication protocol such as Zigbee, Wi-Fi, and Bluetooth.

Each of the OS controller 200 and the function controller 550 may include a separate memory (internal memory), and may store, in the memory, function result information or error information generated in the process of performing a function.

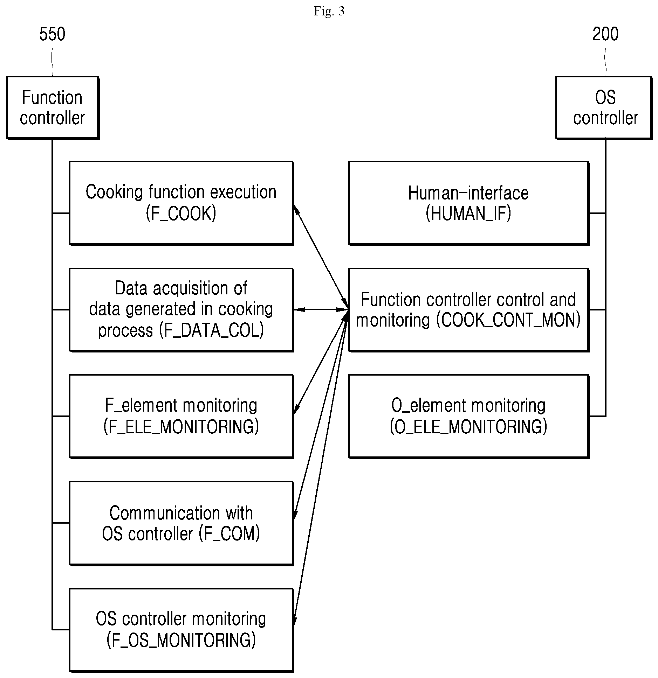

FIG. 3 is a diagram illustrating categories of functions performed by an OS controller and a function controller according to an embodiment of the present invention. Each function includes a case in which each of the controllers 200 and 550 performs a corresponding function.

Each of the controllers 200 and 550 may perform the functions simultaneously or sequentially.

The function controller 550 controls the functional unit 500 that provides a cooking function. The operating system (OS) controller 200 transmits a signal to the function controller 550. The function controller 550 instructs an operation of the functional unit 500. The operating system (OS) controller 200 controls the digital controller door 100 that provides a human interface.

The functions performed by the function controller 550 include cooking function execution F_COOK. In addition, the functions performed by the function controller 550 include data acquisition F_DATA_COL of data generated in the cooking process. In addition, functions performed by the function controller 550 include F_element monitoring F_ELE_MONITORING. In addition, functions performed by the function controller 550 include communication F_COM with the OS controller 200. In addition, functions performed by the function controller 550 include OS controller monitoring F_OS_MONITORING. The OS controller 200 and the function controller 550 may operate independently, and may inform the state or operation status of each component via transmission and reception of signals to and from each other.

In the cooking function execution F_COOK, the function controller 550 controls the cooking appliance function provider 560 so that the cooking appliance 1000 may perform cooking. Alternatively, in addition to cooking such as heating, a function in which the function controller 550 controls the operation of the inside lamp 570, the outside lamp 580, and the ventilation fan 590 may be included in the cooking function execution F_COOK.

The function of the data acquisition F_DATA_COL of the data generated in the cooking process is a function of the function controller 550 collecting or acquiring various result values calculated by the the elements or components of the functional unit 500 or data related to the current state in the cooking function execution F_COOK process.

The F_element monitoring (F_ELE_MONITORING) refers to a function in which the function controller 550 monitors elements or components of the functional unit 500. The function controller 550 may monitor whether each elements or component operates properly or whether each element or component operates according to a previous instruction to perform a function.

The communication F_COM function with the OS controller means that the function controller 550 provides data obtained in F_DATA _COL, F _ELE_MONITORING, etc. to the OS controller 200.

The OS controller monitoring F_OS_MONITORING function refers to a function in which the function controller 550 transmits a predetermined packet to the OS controller 200 to check whether the OS controller 200 is operating properly.

The F_COM and F_OS_MONITORING functions may be implemented as one function. That is, even when the cooking function is not performed, the function controller 550 transmits the data obtained through the F_ELE_MONITORING to the OS controller 200. The function controller 550 may check whether the OS controller 200 is in a normal state or an abnormal state based on whether the OS controller 200 has transmitted an acknowledgement (ACK) response to the transmitted data.

The functions performed by the OS controller 200 include a human-interface HUMAN_IF. In addition, the functions performed by the OS controller 200 include function controller control and monitoring COOK_CONT_MON. In addition, the functions performed by the OS controller 200 include O_element monitoring O_ELE_MONITORING. In this regard, one embodiment of the function controller control and monitoring COOK_CONT_MON is that the OS controller 200 transmits a predetermined signal to the function controller 550 so that the function controller 550 may control the functional unit 500, that is, the body 1010.

The human-interface HUMAN_IF function refers to a function in which the OS controller 200 outputs a user interface, such as various information or a menu necessary for controlling the cooking appliance, and receives a user's touch input thereto.

One embodiment of the function controller control and monitoring COOK_CONT_MON is that the OS controller 200 provides a signal to the function controller 550 so that the function controller 550 controls the operation of the functional unit 500, that is, the body 110. In addition, one embodiment of the function controller control and monitoring COOK_CONT_MON is that predetermined information collected by the function controller 550, for example, information necessary for monitoring the state or an operation status of the functional unit 500, that is, the body 110, is transmitted to the OS controller 200 in a form of a predetermined wired or wireless signal.

More specifically, when the user selects a specific cooking function in the human-interface HUMAN_IF function, the OS controller 200 may instruct the function controller 550 to execute the cooking function.

In addition, the OS controller 200 may perform monitoring to receive values of the operation states or cooking results of the elements or the components constituting the functional unit 500 from the function controller 550. All of these functions are included in the function controller control and monitoring COOK_CONT_MON. Accordingly, the function controller control and monitoring COOK_CONT_MON of the OS controller 200 is related to five functions of the function controller 550.

The O_element monitoring O_ELE_MONITORING refers to a function in which the OS controller 200 monitors the elements or the components of the digital controller door 100. The OS controller 200 may monitor whether each of the elements or the components operates properly, or whether each element or component operates according to a previous instruction to perform a function.

As shown in FIG. 3, the function controller 550 and the OS controller 200 perform respective given functions independently but in association with each other. Accordingly, the function controller 550 checks whether the OS controller 200 operates normally or not in the process of performing the function, while the OS controller 200 checks whether the function controller 550 operates normally or not in the process of performing the function. When an abnormality occurs in an component of one of the function controller 550 and the OS controller 200, the other of the function controller 550 and the OS controller 200 may cope with this situation.

Hereinafter, a schematic outer appearance and configuration of a cooking appliance including the digital controller door 100 of the present invention will be described. This corresponds to one embodiment of the present invention, and a scheme and a direction in which the digital controller door 100 is opened may be implemented in various ways.

The present invention relates to a scheme for controlling a cooking appliance using a digital controller door disposed at a front surface of the cooking appliance.

According to the present invention, a door of a microwave oven disposed on top of an oven or a gas stove acts as a LCD screen (an embodiment of a display). The Android (an embodiment of a OS controller) of the LCD screen and the microcomputer (an embodiment of a function controller) of the microwave oven cooperate with each other. A LCD component operates according to various operating/external environments of the microwave oven or controls a specific function of the microwave oven.

The digital controller door of the present invention may be combined with the cooking appliance to open and close the inside of the cooking appliance. An embodiment of the cooking appliance of the present invention is a microwave oven. However, embodiments of the present invention is not limited thereto. An embodiment of the cooking appliance including the digital controller door of the present invention includes each of various cooking appliances which includes a door equipped with a display such as a LCD providing various user interfaces such as a touch screen, and is capable of storing and cooking food therein.

A display may be mounted on a front surface of a digital controller door provided in the cooking appliance of the present invention to provide various information to a user. The user may know the cooking state of the cooked food on the display.

In addition, when the display is connected to another home appliance to serve as a hub of the home appliances, the information other than cooking food may be obtained through the display. In addition, a command necessary for cooking and various other commands may be input to the display in a touch manner.

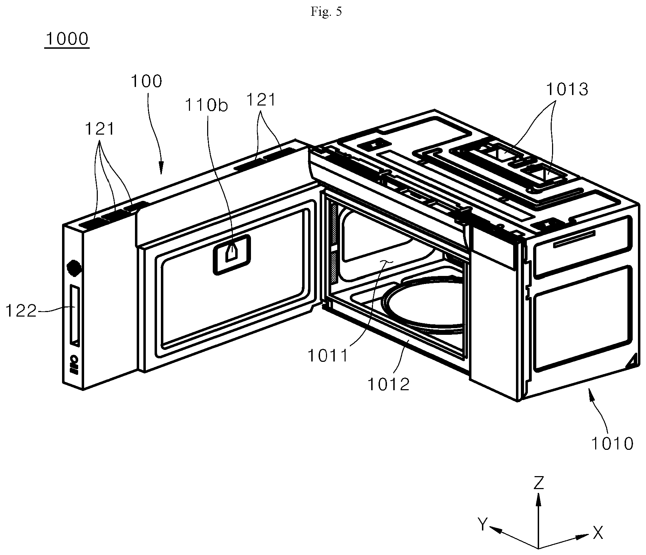

FIG. 4 is a perspective view illustrating a cooking appliance according to an embodiment of the present invention. FIG. 5 is a diagram illustrating a state in which the digital controller door 100 is opened in FIG. 4.

According to an embodiment of the present invention, the sensor 140 of FIG. 2 is embodied as an illuminance sensor 1410 and an infrared sensor 1420. The illuminance sensor 1410 disposed next to the camera 110a detects light in a space in which the cooking appliance 1000 is disposed, for example, illuminance of the kitchen. The infrared sensor 1420 disposed next to the illuminance sensor 1420 detects a person near the cooking appliance 1000.

The sensor 140 according to another embodiment of the present invention may be disposed in another area of the digital controller door 100.

The cooking appliance according to the embodiment may be disposed at a position spaced apart from the heating cooking device in the vertical direction above a position where a heating-type oven, a gas stove, etc. are disposed.

Due to the arrangement of the cooking appliance, a user may conveniently use the heating cooking device including the cooking appliance. In addition, the cooking appliance may serve as a hood of the heating cooking device disposed under the cooking appliance. In this case, the cooking appliance may include components for use as the hood.

The cooking appliance may cook food using microwaves belonging to electromagnetic waves and/or heater heat. The cooking appliance may include the body 1010 in which a cavity 1011 is formed, and the digital controller door 100 configured to open and close the cavity 1011. The body 1010 is an embodiment of the functional unit 500 of FIG. 2 as described above. According to an embodiment of the present invention, the body 1010 may act in the same manner as the functional unit 500 may. Alternatively, according to an embodiment of the present invention, the components of the functional unit 500 may be implemented in the body 1010. Accordingly, in various embodiments, the functional unit 500 and the body 1010 may be interchangeable with each other.

Food to be cooked may be placed in the cavity 1011. The digital controller door 100 may be disposed in front of the cavity 1011 and pivotally mounted at the body 1010 to open and close the cavity 1011.

A ventilation hole 1013 for discharging air suctioned from a suction unit provided at a lower portion of the body 1010 to the outside may be provided at an upper portion of the body 1010. A suction unit may be provided at a lower portion of the body 1010 of the cooking appliance. Accordingly, the cooking appliance may serve as a hood that sucks air discharged from the heating cooking device disposed below the cooking appliance and discharges the air to the outside.

The body 1010 may further include a front panel 1012 provided along an edge of an inlet of the cavity 1011. One surface of the front panel 1012 faces one surface of a choke member when the digital controller door 100 is closed, thereby closing the cavity 1011.

The front panel 1012 may be constructed to surround the edge of the inlet of the cavity 1011 and protrude in a frontward direction and has a predetermined width. Accordingly, when the digital controller door 100 is closed, the edge portion of the digital controller door 100 and the cavity 111 may overlap each other.

Due to this structure, the front panel 1012 may seal the cavity 1011 in a state in which the digital controller door 100 has been closed, thereby preventing oil, moisture, oil vapor, etc. generated during the cooking process of the food placed in the cavity 1011 from being leaked out to the outside through the inlet of the cavity 1011.

In the structure of FIG. 4, the speaker 1310 and the microphone 1320, which are components of the speaker/microphone 130, may be disposed at the lower end of the digital controller door 100. However, the present invention is not limited to such a specific position, and the speaker 1310 and the microphone 1320 may be disposed in various areas of the digital controller door 100.

In addition, the speaker 1310 may include at least one speaker. The microphone 1320 may include at least one microphone.

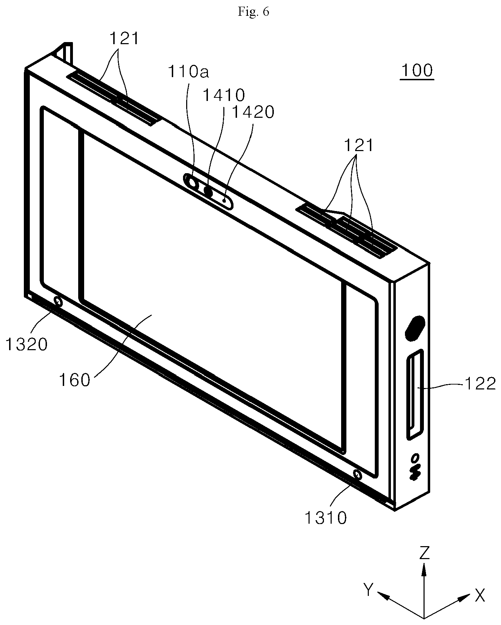

FIG. 6 is a perspective view illustrating a digital controller door of a cooking appliance according to an embodiment of the present invention.

The digital controller door 100 may include controller hardware (e.g., a hardware chip) or controller software (software including programs) that executes a predetermined algorithm and performs following tasks based on sensing results from various sensors disposed at the cooking appliance or the door and an operating state of the cooking appliance.

In FIGS. 4 to 6, a reference numeral 121 denotes a through hole through which air is introduced or discharged. A first camera 110a and the sensor 140 may be disposed on the front surface of the digital controller door 100. The sensor 140 includes a human sensor, an illuminance sensor, etc.

The display 160 is used to control the cooking appliance 1000 or displays an operation process in the cooking appliance 1000. The ventilation hole 1013 may include a suction portion defined at a lower end of the body 1010 and a discharge portion defined at an upper end of the body 1010. A handle 122 is disposed on one side of the digital controller door 100 such that the user may open and close the digital controller door 100 using the handle.

A second camera 110b may be disposed on an inner side surface of the digital controller door 100, and the second camera 110b may photograph the inside of the cavity 1011 to check the cooking state.

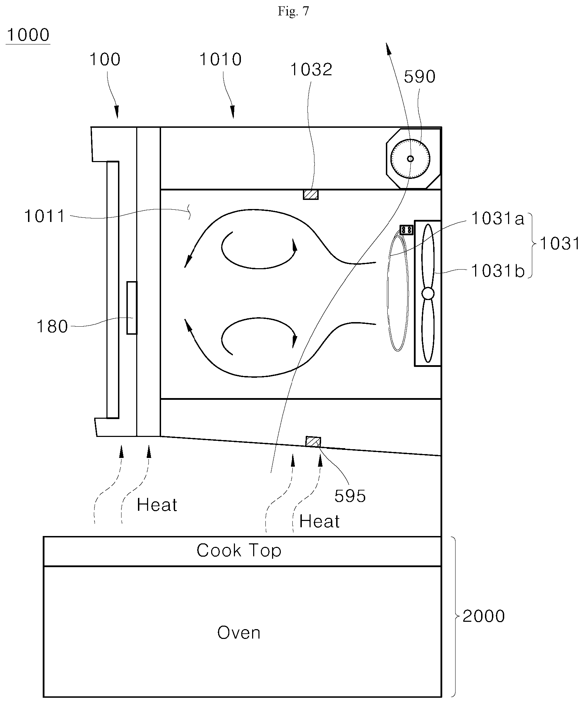

FIG. 7 is a schematic view illustrating a position where a cooking appliance is disposed according to an embodiment of the present invention. In FIG. 7, the flow of air is indicated by a solid line arrow, and the transfer direction of heat is indicated by a hidden line arrow. A heating cooking device 2000 may include, for example, an oven and a cooktop disposed on top of the oven.

The cooking appliance may include a convection-based heating device 1031 and a microwave generating device 1032 to heat food accommodated in the cavity 1011.

The convection-based heating device 1031 may generate heat to heat food, and the microwave generating device 1032 may generate microwaves to heat food. The user may select and operate one of the convection-based heating device 1031 or the microwave generating device 1032 to heat and cook food.

The convection-based heating device 1031 may include a convection heater 1031a and a convection fan 1031b. The convection heater may generate heat to heat food accommodated in the cavity 1011. The convection fan 1031b may force the air in the cavity 1011 heated by the convection heater 1031a to flow in the cavity 1011.

When the convection fan 1031b operates, the heated air may be smoothly convectively circulated in the cavity 1011, and accordingly, heat is uniformly supplied to the entire cavity 10 11, so that an entirety of the food accommodated in the cavity 1011 may be evenly cooked.

In order to prevent the display 160 provided in the digital controller door 100 from being overheated by the heated air coming up from the heating cooking device disposed under the cooking appliance, resulting in malfunction of or damage to the display 160, it is necessary to cool the display 160 and prevent external heat from being transferred to the display 160. The door fan 180 and the ventilation fan 590 may perform the above role.

The door fan 180 may be disposed inside the digital controller door 100. The door fan 180 may effectively cool the display 160 by flowing air toward the rear surface of the display 160.

In addition, the air flow discharged from the door fan 180 to the outside of the digital controller door 100 may form an air curtain to block the heat rising from the heating cooking device disposed under the cooking appliance.

The ventilation fan 590 may be disposed at a top of the body 1010 and may be disposed in a flow path of the ventilation hole 1013. The ventilation fan 590 may allow air coming up from the heating cooking device to flow to the ventilation hole 1013 to discharge the air to out of the cooking appliance.

Accordingly, when the ventilation fan 590 operates, a significant portion of the heated air coming up from the heating cooking device flows to the ventilation hole 1013 formed in the body 1010, and the flow rate of air heading to the display 160 of the digital controller door 100 may be relatively reduced. As a result, the flow rate of the heated air directed to the display 160 of the digital controller door 100 is reduced, thereby suppressing overheating of the display 160.

In order to block overheating of the display 160, it is necessary to appropriately use the door fan 180 and the ventilation fan 590. Since one of main purposes of the door fan 180 is to prevent the overheating of the display 160, the door fan 180 may operate in a low-speed rotation mode and a high-speed rotation mode based on the temperature condition of air approaching the digital controller door 100.

The door fan 180 has a small amount of air blown in the low-speed rotation mode and a large amount of air blown in the high-speed rotation mode. Therefore, the temperature of the display 160 may be effectively lowered by the door fan operating in the low-speed rotation mode when the temperature of the air is low and by the door fan operating in the high-speed rotation mode when the temperature of the air is high.

In order to reliably suppress the overheating of the display 160, it is advantageous to operate both the door fan 180 and the ventilation fan 590 and operate the door fan 180 in the high-speed rotation mode.

The thermistor 595 disposed at a bottom of the cooking appliance 1000 may sense the heat from the heating cooking device disposed under the cooking appliance 1000. In addition, the auto ventilation function may operate upon sensing the heat.

In the embodiment of FIG. 7, the outside lamp 580 may emit light toward the lower end. For example, when the user touches the digital controller door 100, the outside lamp 580 may be turned on. Alternatively, when a movement of a person is identified and ambient illuminance is lower than or equal to a predetermined reference (for example, illuminance 10 lux or lower), the outside lamp 580 may be turned on under the control of the OS controller 200.

In addition, the door lamp 195 may be disposed at a lower end of the digital controller door 100. For example, when a user touches the digital controller door 100, the door lamp 195 may be turned on. Alternatively, when a movement of a person is identified and ambient illuminance is lower than or equal to a predetermined reference (e.g., illuminance 10 lux or lower), the door lamp 195 may be turned on under the control of the OS controller 200.

According to an embodiment of the present invention, the outside lamp 580 may be controlled by the function controller 550. In this case, the OS controller 200 may instruct the function controller 550 to turn on/off the outside lamp 580.

According to another embodiment of the present invention, the outside lamp 580 may be directly controlled by the OS controller 200. In this case, the outside lamp 580 may be disposed in the functional unit (i.e., function unit) 500, but may be controlled by the OS controller 200 of the digital controller door 100.

The digital controller door 100 may receive a user's command word through a touch input of the display 160 and control the cooking appliance 1000 based on the command word. In addition, the digital controller door 100 may control the cooking appliance 1000 according to a voice command word input through the microphone 1320. That is, the microphone 1320 receives a user's voice, and the speaker 1310 outputs a predetermined sound. The display 160 outputs an image. Accordingly, the digital controller door 100 may provide a human interface.

In order to increase the accuracy of voice recognition of the cooking appliance 1000, in accordance with the present invention, a message that the user utters as a voice and the devices require recognition thereof is classified into two types to increase the voice recognition performance. The languages spoken by the user are classified into three types: a wake-up word, a command word, and a dummy word. The voice command is classified into a wake-up word and a command word (natural language). The wake-up word performs a function of notifying the device that the command word as a natural language is to be input subsequently.

In an embodiment, the wake-up word includes a name of a device called to trigger the natural language recognition. The subsequent input spoken voice thereto is an actual control command word of the device. For example, this wake-up word may include the classification name of the device ("oven", "microwave oven"), the brand name of the device ("LG", "Dios"), or the words of exclamation or conversational words ("hey", "look here").

The command word indicates the operation of the device and may be variously configured according to the classification of the device. In an embodiment, the command word may control on/off of the device or instruct to perform a specific function configured in the device. This command word may be configured in various ways based on each device.

Accordingly, for example, the user utters "DIOS, stop cooking". In response, "DIOS" as a wake-up word is recognized by the device, such that a command word recognition mode (command word input mode) is triggered. Then, the OS controller 200 has identified "Stop cooking" as an user utterance input subsequently to the wake-up word, and thus, may instruct the functional unit 550 of the cooking appliance 1000 to stop cooking.

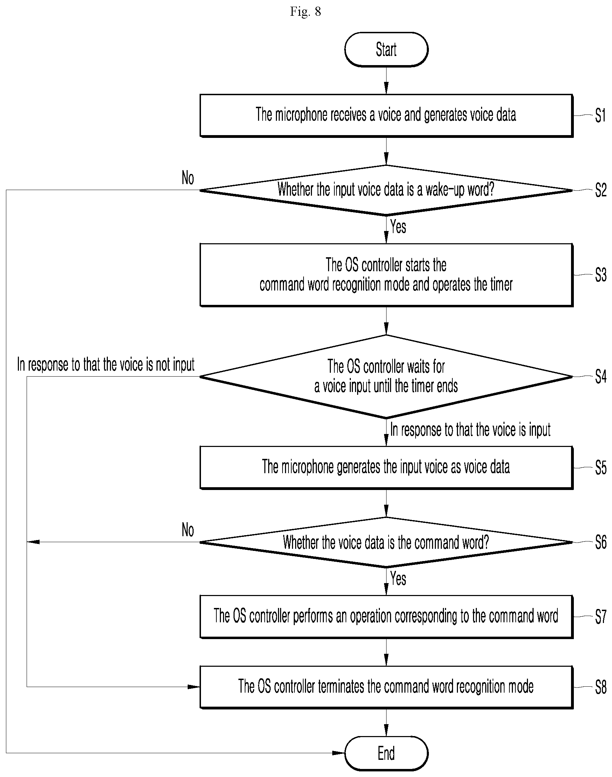

FIG. 8 is a diagram illustrating a process in which a cooking appliance recognizes a wake-up word and a command word according to an embodiment of the present invention.

FIG. 8 shows a process in which when the microphone 1320 receives a predetermined wake-up word, the OS controller 200 performs a command word recognition mode to receive a command word for a preset time duration in controlling the digital controller door 100. According to one embodiment of the present invention, a controller providing general control functions (e.g., a controller disposed on a digital controller door or a controller disposed on a functional unit) can perform the above-described command recognition mode. The OS controller and/or the function controller are embodiment of a controller.

When the microphone 1320 receives a voice and generates voice data in S1, the OS controller 200 checks whether the input voice data corresponds to a wake-up word in S2. When the input voice corresponds to the wake-up word, the OS controller 200 starts the command word recognition mode and operates the timer for subsequent recognition of a command word in S3.

The command word recognition mode includes a mode in which the OS controller 200 controls a specific function of the cooking appliance 1000 in order to increase the accuracy of the command word input. The timer refers to the time duration for which the command word recognition mode is maintained. This time duration may be preset or may be re-adjusted according to the user's voice input habit.

The OS controller 200 waits for a voice input until the timer ends in S4. In response to that the voice is not input until the timer is terminated, the OS controller 200 terminates the command word recognition mode in S8.

On the contrary, when a voice is input before the timer ends at S4, the microphone 1320 generates the input voice as voice data in S5. The OS controller 200 checks whether the voice data corresponds to the command word in S6. In response to that the voice data corresponds to the command word based the check result, the OS controller 200 performs an operation corresponding to the command word in S7. The OS controller 200 terminates the command word recognition mode in S8.

When the cooking appliance 1000 performs a specific function of generating a sound or the digital controller door 100 outputs a sound, noise may be contained in a process in which the microphone 1320 receives a voice. Such noise may reduce the accuracy of recognition when the OS controller 200 recognizes the input voice.

Accordingly, the OS controller 200 may perform control to stop the cooking appliance 1000 from generating a sound or to reduce the volume of the sound for a predetermined time duration (e.g., a time duration for which the timer operates; a short time duration) after the wake-up word has been input.

For example, upon entering the command word recognition mode state, the OS controller 200 may temporarily lower the rotational speed of the ventilation fan 590 (for example, the hood fan) or the rotational speed of the door fan 180, or may lower the operation level thereof, thereby weakening the generation of sound.

Alternatively, upon entering the command word recognition mode state, the OS controller 200 may reduce the volume of the sound generated by the digital controller door 100. This corresponds to a case in which the speaker 1310 of the digital controller door 100 outputs a predetermined sound.

In this way, the command word recognition mode for increasing the recognition performance of the command word after the wake-up word has been input is performed for a preset time duration. In response to that a separate command word is not input within a preset time duration, the OS controller 200 terminates the command word recognition mode and resumes the specific function of the cooking appliance 1000 controlled in the command word recognition mode to its original state.

As the command word recognition mode has been terminated, the volume of the sound output from the speaker 1310, the operation level of the door fan 180, the operation level of the ventilation fan 590, etc. may be restored to a state before the command word recognition mode starts.

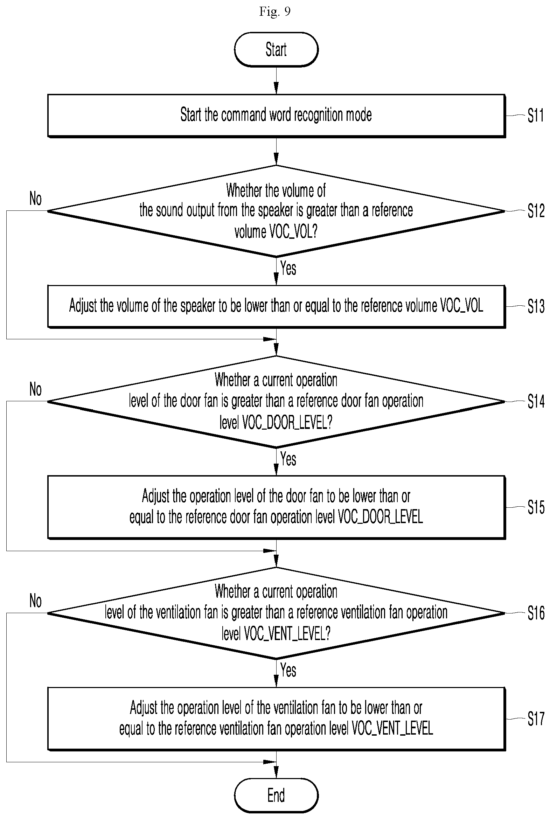

FIG. 9 is a view illustrating a process of controlling an operation of a ventilation fan or a door fan in a command word recognition mode according to an embodiment of the present invention.

In the command word recognition mode, the OS controller 200 adjusts the volume of the sound output from the speaker 1310 or the operation level of the ventilation fan 590 included in the functional unit 500 or the door fan 180 included in the digital controller door 100 so that the command word input subsequently to the wake-up word may be accurately input.

The OS controller 200 starts the command word recognition mode in S11. In order to improve the performance of voice recognition, it is checked whether the volume of the sound (music, guide comment, etc.) output from the speaker 1310 is greater than a reference volume VOC_VOL in S12. The reference volume VOC_VOL may be preset. Alternatively, as the number of speech recognitions is accumulated, the OS controller 200 may set the reference volume VOC_VOL to a new value.

In response to that the volume of the sound output from the speaker 1310 is greater than the reference volume VOC_VOL in S12 (S12-Yes), the OS controller 200 adjusts the volume of the speaker 1310 to be lower than or equal to the reference volume VOC_VOL in S13. In response to that the volume of the sound output from the speaker 1310 is lower than or equal to the reference volume VOC_VOL in S12 (S12-No), the OS controller 200 performs operation S14.

Next, in order to improve the performance of voice recognition, the OS controller 200 checks whether a current operation level of the door fan 180 is greater than a reference door fan operation level VOC_DOOR_LEVEL in S14. The reference door fan operation level VOC_DOOR_LEVEL may be preset. Alternatively, as the number of voice recognitions accumulates, the OS controller 200 may set the reference door fan operation level VOC_DOOR_LEVEL to a new value.

In response to that the current operation level of the door fan 180 is greater than the reference door fan operation level VOC_DOOR_LEVEL at S14 (S14-Yes), the OS controller 200 adjusts the operation level of the door fan 180 to be lower than or equal to the reference door fan operation level VOC_DOOR_LEVEL in S15. In response to that the current operation level of the door fan 180 is lower than or equal to the reference door fan operation level VOC_DOOR_LEVEL at S14 (S14-No), the OS controller 200 performs operation S16.

Next, in order to improve the performance of voice recognition, the OS controller 200 checks whether a current operation level of the ventilation fan 590 is greater than a reference ventilation fan operation level VOC_VENT_LEVEL in S16. The reference ventilation fan operation level VOC_VENT_LEVEL may be preset. Alternatively, as the number of speech recognitions is accumulated, the OS controller 200 may set the reference ventilation fan operation level VOC_VENT_LEVEL to a new value.

In response to that the current operation level of the ventilation fan 590 is greater than the reference ventilation fan operation level VOC_VENT_LEVEL at S16 (S16-Yes), the OS controller 200 adjusts the operation level of the ventilation fan 590 to be lower than or equal to the reference ventilation fan operation level VOC_VENT_LEVEL in S17.

In the embodiment of FIG. 9, the speaker 1310, the door fan 180, and the ventilation fan 590 may be controlled separately.

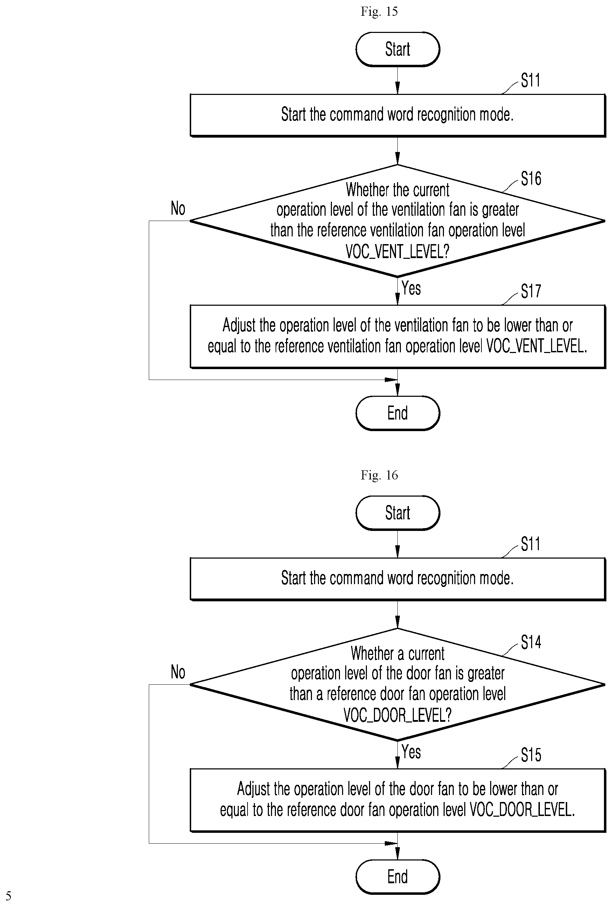

In an embodiment of the present invention, after starting the command word recognition mode in S11, the OS controller 200 may perform only S16 and S17 without a process of S12 to S15. In this case, in the command word recognition mode, the OS controller 200 may adjust only the operation level of the ventilation fan 590 included in the functional unit 500. This will be described in detail in FIG. 15.

In addition, according to another embodiment of the present invention, after starting the command word recognition mode in S11, the OS controller 200 may perform only S14 and S15 without the process of S12 to S13 and without the process of S16 to S17. In this case, in the command word recognition mode, the OS controller 200 may adjust only the operation level of the door fan 180 included in the digital controller door 100. This will be described in detail in FIG. 16.

In FIG. 9, an embodiment in which the operation level of each of the speaker 1310, the door fan 180, and the ventilation fan 590 related to the sound is changed in the process of performing the command word recognition mode has been described. However, the accuracy at which the microphone 1320 receives a voice may vary according to the user's command word utterance habit. Accordingly, the OS controller 200 may store the sound related characteristics (the volume of the voice, the frequency band of the voice, etc.) of the wake-up word or the command word.

To this end, when a wake-up word or a command word is input, the OS controller 200 may temporarily store voice data including the wake-up word or the command word, and extract and store the volume or the frequency band of the voice from the voice data.

In addition, the OS controller 200 stores the number of times the command word recognition error occurs after the wake-up word has been input or a situation (a function performed by the cooking appliance when the command word recognition error occurs, etc.) in which the command word recognition error occurs after the wake-up word has been input. After storing such information, the OS controller 200 may change the reference values based on the stored information when performing the command word recognition mode.

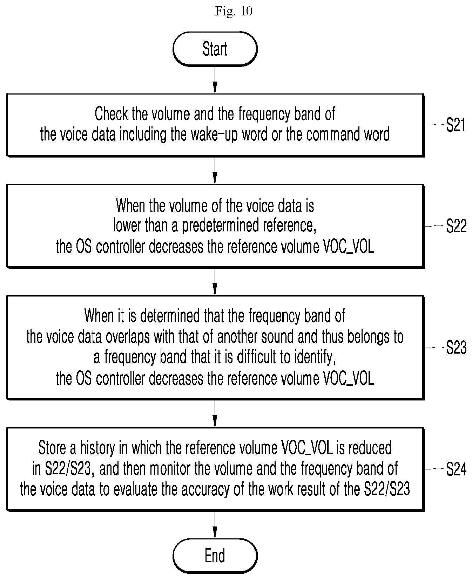

FIG. 10 is a diagram illustrating a process of, by an OS controller, adjusting a reference volume used in a command word recognition mode according to an embodiment of the present invention. FIG. 10 illustrates an example in which the OS controller 200 reduces the reference volume VOC_VOL based on the volume and the frequency band of the voice data including the wake-up word or the command word to increase the recognition performance of the command word in the command word recognition mode.

When a wake-up word is input or a command word of S4 is input in S1 and S2 of FIG. 8, the OS controller 200 checks the volume and the frequency band of the voice data including the wake-up word or the command word in S21.

When the volume of the voice data is lower than a predetermined reference, the OS controller 200 decreases the reference volume VOC_VOL in S22.

In addition, the OS controller 200 decreases the reference volume VOC_VOL when it is determined that the frequency band of the voice data overlaps with that of another sound and thus belongs to a frequency band that it is difficult to identify in S23.

As a result, the reference volume VOC_VOL may be adjusted appropriately for command word recognition based on the specific voice data.

Thereafter, the OS controller 200 may store a history in which the reference volume VOC_VOL is reduced in S22/S23, and then may monitor the volume and the frequency band of the voice data to evaluate the accuracy of the work result of the S22/S23 in S24.

In response to that, based on a result of performing voice recognition on the volume or the frequency band of the voice data input thereafter, it is appropriate to return to the reference volume VOC_VOL before the adjustment operation of FIG. 10, the OS controller 200 may restore the value of the reference volume VOC_VOL to the initially set value.

The process of FIG. 10 may be periodically performed. Alternatively, when the volume or the frequency band of a current wake-up word voice data or command word voice data is different from the volume or the frequency band of the previously stored wake-up word voice data or command word voice data, the OS controller 200 may reset the reference volume VOC_VOL and then perform the process of FIG. 10.

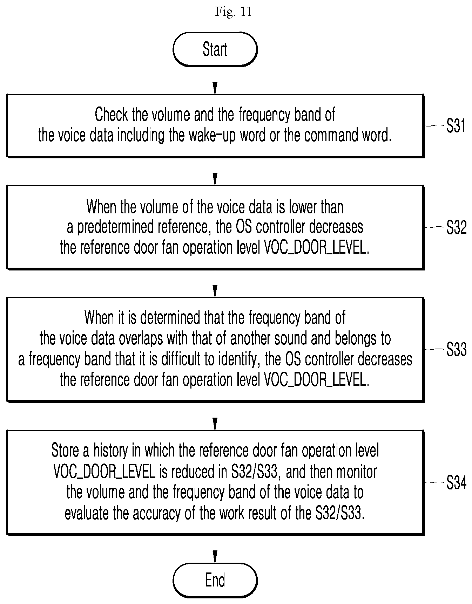

FIG. 11 is a diagram illustrating a process of adjusting, by an OS controller, a reference door fan operation level used in a command word recognition mode according to an embodiment of the present invention. FIG. 11 illustrates an example in which the OS controller 200 reduces the reference door fan operation level VOC_DOOR_LEVEL based on the volume and the frequency band of the voice data including the wake-up word or the command word to increase the recognition performance of the command word in the command word recognition mode.

When a wake-up word is input or a command word of S4 is input in S1 and S2 of FIG. 8, the OS controller 200 checks the volume and the frequency band of the voice data including the wake-up word or the command word in S31.

When the volume of the voice data is lower than a predetermined reference, the OS controller 200 decreases the reference door fan operation level VOC_DOOR_LEVEL in S32.

In addition, the OS controller 200 decreases the reference door fan operation level VOC_DOOR_LEVEL when it is determined that the frequency band of the voice data overlaps with that of another sound and belongs to a frequency band that it is difficult to identify in S33.

As a result, the reference door fan operation level VOC_DOOR_LEVEL may be adjusted appropriately for command word recognition based on the specific voice data.

Thereafter, the OS controller 200 may store a history in which the reference door fan operation level VOC_DOOR_LEVEL is reduced in S32/S33, and then may monitor the volume and the frequency band of the voice data to evaluate the accuracy of the work result of the S32/S33 in S34.

In response to that it is appropriate to return to the reference door fan operation level VOC_DOOR_LEVEL before the adjustment operation of FIG. 11 based on a result of performing voice recognition on the volume or the frequency band of the voice data input thereafter, the OS controller 200 may restore the value of the reference door fan operation level VOC_DOOR_LEVEL to the initially set value.

The process of FIG. 11 may be periodically performed. Alternatively, when the volume or the frequency band of current wake-up word voice data or command word voice data is different from the volume or the frequency band of the previously stored wake-up word voice data or command word voice data, the OS controller 200 may reset the reference door fan operation level VOC_DOOR_LEVEL and then may perform the process of FIG. 11.

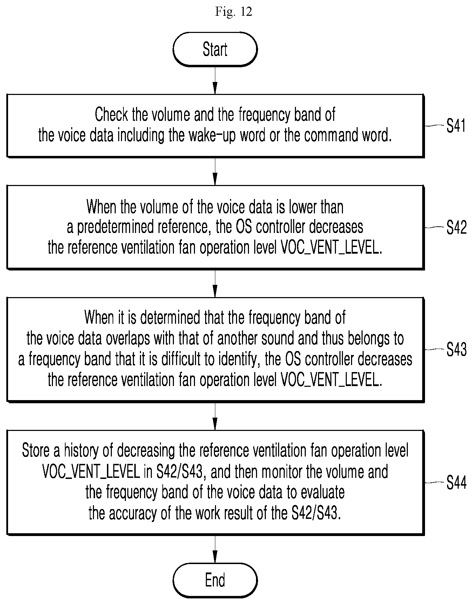

FIG. 12 is a diagram illustrating a process of adjusting, by an OS controller, a reference ventilation fan operation level used in a command word recognition mode according to an embodiment of the present invention. FIG. 12 illustrates an example in which the OS controller 200 decreases the reference ventilation fan operation level VOC_VENT_LEVEL based on the volume and the frequency band of the voice data including the wake-up word or the command word to increase the recognition performance of the command word in the command word recognition mode.

When a wake-up word is input or a command word of S4 is input in operations S1 and S2 of FIG. 8, the OS controller 200 checks the volume and the frequency band of the voice data including the wake-up word or the command word in S41.

When the volume of the voice data is lower than a predetermined reference, the OS controller 200 decreases the reference ventilation fan operation level VOC_VENT_LEVEL in S42.

In addition, the OS controller 200 decreases the reference ventilation fan operation level VOC_VENT_LEVEL when it is determined that the frequency band of the voice data overlaps with that of another sound and thus belongs to a frequency band that is difficult to identify in S43.

As a result, the reference ventilation fan operation level VOC_VENT_LEVEL may be adjusted appropriately for command word recognition based on the specific voice data.

Thereafter, the OS controller 200 may store a history of decreasing the reference ventilation fan operation level VOC_VENT_LEVEL in S42/S43, and then may monitor the volume and the frequency band of the voice data to evaluate the accuracy of the work result of the S42/S43 in S44.

In response to that, based on a result of performing voice recognition on the volume or the frequency band of the voice data input thereafter, it is appropriate to return to the reference ventilation fan operation level VOC_VENT_LEVEL before the adjustment operation of FIG. 12, the OS controller 200 may restore the value of the reference ventilation fan operation level VOC_VENT_LEVEL to the initially set value.

The process of FIG. 12 may be periodically performed. Alternatively, in response to that the volume or the frequency band of current wake-up word voice data or command word voice data is different from the volume or the frequency band of the previously stored wake-up word voice data or command word voice data, the OS controller 200 may reset the reference ventilation fan operation level VOC_VENT_LEVEL and then perform the process of FIG. 12.

In accordance with the present invention, the door fan 180 or the ventilation fan 590 may have a predetermined operation level.

The OS controller 200 may determine an operation level of the door fan 180 and set and control the operation of the door fan 180 based on the determined operation level. The operation level refers to a level of cooling power provided by the door fan 180. The operation level may be linearly increased or decreased and may be increased or decreased in a stepwise manner.

In an embodiment in which the operation level linearly increases or decreases, the OS controller 200 may linearly change the rotation speed of the door fan 180 or may linearly change the magnitude of the voltage or current applied to the door fan 180.

In an embodiment in which the operation level is increased or decreased in a stepwise manner, the OS controller 200 may set the rotation speed of the door fan 180 to specific values or set the magnitude of the voltage or current applied to the door fan 180 to specific values.

In an embodiment in which the operation level is increased or decreased in a stepwise manner, the operation level may be composed of two or more levels such as 0 (Off), 1 (low), and 2 (high). The number of operation levels may vary.

An embodiment in which the operation level is set based on the rotation speed of the door fan 180 will be described. The rotation speed may be set to a rotation per minute (rpm) or may be set to a specific level (low, middle, high, off). When there are two or more door fans 180, the operation level may be set based on the number of door fans 180 which can operate. This is one embodiment. Alternatively, the operation level may be set based on a combination thereof.

The operation level of the door fan 180 may be determined and set in various ways.

First, the operation level of the door fan 180 may include on/off.

Second, the operation level of the door fan 180 may include three or more levels, such as a first level, a second level, and a third level.

In this case, the first level corresponds to an off state or a level providing the lowest cooling power. The second level LV2 is in an on state and corresponds to a level that provides a cooling power higher than the first level LV1. The third level LV3 is in an on state and corresponds to a level that provides a cooling power higher than the second level LV2.

When the rotational speed of the door fan 180 is set to the first level, the second level, or the third level according to an embodiment of the present invention, the rotational speed of the door fan 180 at the first level is lower than the rotational speed of the door fan 180 at the second level. In addition, the rotation speed of the door fan 180 at the second level is lower than the rotation speed of the door fan 180 at the third level. In this regard, the rotation speed of the door fan 180 at the first level may be 0.

According to another embodiment of the present invention, when the magnitude of the voltage applied to the door fan 180 is set to the first level, the second level, or the third level, the magnitude of the voltage applied to the door fan 180 at the first level is lower than the magnitude of the voltage applied to the door fan 180 at the second level. In addition, the magnitude of the voltage applied to the door fan 180 at the second level is lower than the magnitude of the voltage applied to the door fan 180 at the third level. In this regard, the magnitude of the voltage applied to the door fan 180 at the first level may be 0.

According to another embodiment of the present invention, when the magnitude of the current applied to the door fan 180 is set to the first level, the second level, and the third level, the magnitude of the current applied to the door fan 180 at the first level is lower than the magnitude of the current applied to the door fan 180 at the second level. In addition, the magnitude of the current applied to the door fan 180 at the second level is lower than the magnitude of the current applied to the door fan 180 at the third level. In this regard, the magnitude of the current applied to the door fan 180 at the first level may be 0.

Similarly, the OS controller 200 or the functional unit 550 may determine an operation level of the ventilation fan 590 and set and control the operation of the ventilation fan 590 based on the determined operation level. The operation level refers to a level of a cooling power or ventilating power or suction power provided by the ventilation fan 590. The operation level may be linearly increased or decreased and may be increased or decreased in a stepwise manner.

In the implementation in which the operation level linearly increases or decreases, the OS controller 200 or the functional unit 550 may linearly change the rotational speed of the ventilation fan 590 or may linearly change the magnitude of the voltage or current applied to the ventilation fan 590.

In an embodiment in which the operation level is increased or decreased in a stepwise manner, the OS controller 200 or the functional unit 550 may set the rotation speed of the ventilation fan 590 to specific values or set the magnitude of the voltage or current applied to the ventilation fan 590 to specific values.

In an embodiment in which the operation level is increased or decreased in a stepwise manner, the operation level may be composed of two or more levels such as 0 (Off), 1 (low), and 2 (high). The number of levels may vary.

An embodiment in which the operation level is set based on the rotational speed of the ventilation fan 590 will be described. The rotation speed may be set to a rotation per minute (rpm) or may be set to a specific level (low, middle, high, off). When there are two or more ventilation fans 590, the operation level may be set based on the number of ventilation fans 590 which can operate. This is merely one embodiment. Alternatively, the operation level may be set based on a combination thereof.

The operation level of the ventilation fan 590 may be determined and set in various ways.

First, the operation level of the ventilation fan 590 may include On/Off.

Second, the operation level of the ventilation fan 590 may include three or more levels, such as a first level, a second level, and a third level.

In this case, the first level corresponds to an off state or a level providing the lowest cooling power or lowest ventilating power or lowest suction power. The second level LV2 is in an on state and corresponds to a level that provides a cooling power or ventilating power suction power higher than the first level LV1. The third level LV3 is in an on state and corresponds to a level that provides a cooling power or ventilating power suction power higher than the second level LV2.

When the rotational speed of the ventilation fan 590 is set to the first level, the second level, or the third level according to an embodiment of the present invention, the rotational speed of the ventilation fan 590 at the first level is lower than the rotational speed of the ventilation fan 590 at the second level. In addition, the rotation speed of the ventilation fan 590 at the second level is lower than the rotation speed of the ventilation fan 590 at the third level. In this regard, the rotation speed of the ventilation fan 590 at the first level may be 0.

According to another embodiment of the present invention, when the magnitude of the voltage applied to the ventilation fan 590 is set to the first level, the second level, or the third level, the magnitude of the voltage applied to the ventilation fan 590 at the first level is lower than the magnitude of the voltage applied to the ventilation fan 590 at the second level. In addition, the magnitude of the voltage applied to the ventilation fan 590 at the second level is lower than the magnitude of the voltage applied to the ventilation fan 590 at the third level. In this regard, the magnitude of the voltage applied to the ventilation fan 590 at the first level may be 0.

According to still another embodiment of the present invention, when the magnitude of the current applied to the ventilation fan 590 is set to the first level, the second level, or the third level, the magnitude of the current applied to the ventilation fan 590 at the first level is lower than the magnitude of the current applied to the ventilation fan 590 at the second level. In addition, the magnitude of the current applied to the ventilation fan 590 at the second level is lower than the magnitude of the current applied to the ventilation fan 590 at the third level. In this regard, the magnitude of the current applied to the ventilation fan 590 at the first level may be zero.

In FIGS. 10 to 12, the term "frequency band that it is difficult to identify" means the frequency band of the voice data which is lower than the typical lowest value of the frequency band of the voice data or is higher than the typical highest value of the frequency band of the voice data, and the range thereof may be predetermined.

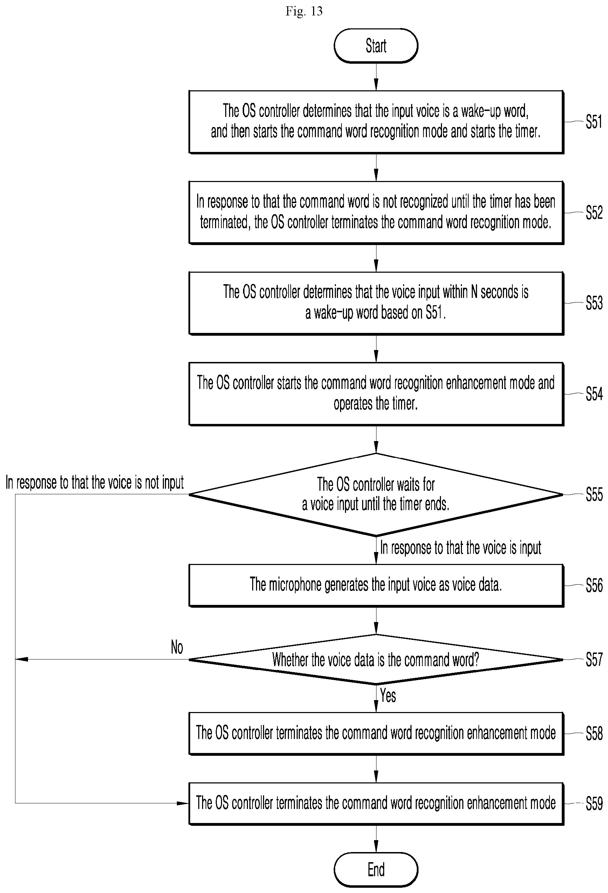

FIG. 13 is a diagram illustrating a process in which the OS controller performs a command word recognition enhancement mode on repeated input of a wake-up word according to an embodiment of the present invention.

The cooking appliance 1000 may generate a predetermined sound. Therefore, as described above, the recognition accuracy of the user's voice command word may be increased by performing the command word recognition mode. However, when the accuracy of voice recognition is lowered even though the command word recognition mode has been performed, the OS controller may perform the command word recognition enhancement mode.

That is, in response to that the command word is not recognized within a preset time duration and then the wake-up word is input within the preset time duration, the OS controller 200 may perform the command word recognition enhancement mode. This will be described in detail.

As shown in FIG. 8, the OS controller 200 determines that the input voice is a wake-up word, and then starts the command word recognition mode and starts the timer in S51. However, in response to that the command word is not recognized until the timer has been terminated, the OS controller 200 terminates the command word recognition mode in S52. In this regard, the state in which the command word is not recognized includes i) a state in which the microphone 1320 does not receive a voice or ii) a state in which the microphone 1320 receives a voice but it is determined that the voice is not a command word based on a result of voice recognition.

This includes a case in which the user utters a wake-up word but does not input a command word or inputs an incorrect command word, or a case in which the user inputs a command word but the input command word is not properly recognized. When the user utters the command word but is not recognized, the user may attempt the voice command by uttering the wake-up word again.

Accordingly, when the voice input within N seconds (a preset time duration such as 2 seconds or 3 seconds) is a wake-up word based on S51 in S53, the OS controller 200 determines that the user repeatedly attempts to input the wake-up word.

Accordingly, the OS controller 200 starts the command word recognition enhancement mode and operates the timer in order to deal with a situation in which voice recognition is not properly performed in the process of receiving the command word in S54. The command word recognition enhancement mode refers to a mode in which the noise is lowered by an amount larger than an amount by which the noise is lowered in the command word recognition mode.

For example, in the command word recognition enhancement mode, the OS controller 200 may further decrease a value of each of the reference volume VOC_VOL, the reference door fan operation level VOC_DOOR_LEVEL, the reference ventilation fan operation level VOC_VENT_LEVEL, etc., or may set the value thereof to 0.

After starting the command word recognition enhancement mode, the OS controller 200 waits for a voice input until the timer ends in S55. When the voice is input, the microphone 1320 generates the input voice as voice data in S56. The OS controller 200 checks whether the voice data is a command word in S57. In response to that the voice data is the command word, the OS controller 200 executes the operation corresponding to the command word in S58 and terminates the command word recognition enhancement mode in S59.

As the command word recognition enhancement mode has been terminated, the volume of the sound output from the speaker 1310, the operation level of the door fan 180, the operation level of the ventilation fan 590, etc. may be restored to the state before the command word recognition enhancement mode starts.

On the other hand, when the voice is not input in S55 or when the voice data input in S56 is not a command word, the OS controller terminates the command word recognition enhancement mode in S59.

When the command word recognition enhancement mode is repeated, the OS controller 200 may change the operation level of each of the speaker 1310, the door fan 180, and the ventilation fan 590 as described with reference to FIGS. 10 to 12.

The noise generated by the cooking appliance 1000 in the command word recognition mode is greater than the noise generated by the cooking appliance 1000 in the command word recognition enhancement mode. That is, a state in which the noise generated by the cooking appliance 1000 is lower is achieved in the command word recognition enhancement mode.

In the command word recognition enhancement mode, the OS controller 200 may set the volume to 0 so that the speaker 1310 does not output a sound.

In addition, the OS controller 200 may turn off the door fan 180 or set the operation level thereof to the lowest level.

In addition, the OS controller 200 may turn off the ventilation fan 590 or set the operation level thereof to the lowest level. In this regard, when the ventilation fan 590 is in an auto ventilation situation, the OS controller 200 may set the operation level of the ventilation fan 590 in a different manner. For example, in the auto-ventilation situation, the ventilation fan 590 may be operating at the highest level. Accordingly, the OS controller 200 may control the operation level of the ventilation fan 590 to a high level or to a middle level in the command word recognition mode.

In addition, in the command word recognition enhancement mode and in the auto-ventilation state, the OS controller 200 may control the operation level of the ventilation fan 590 to a high level or a middle level as in the command word recognition mode.

When the thermistor 595 detects the temperature, the ventilation fan 590 may automatically operate based on the temperature detection. This is referred to as the auto ventilation. The function controller 550 may automatically activate the auto ventilation function based on the temperature sensed by the thermistor 595 to prevent component failure or damage. That is, the function controller 550 may activate the auto-ventilation function when it is determined that the temperature of the thermistor is equal to or higher than a predetermined temperature, and accordingly, may notify the OS controller 200 of information indicating that the auto-ventilation function is being activated.

In response to reception of the notification, the OS controller 200 may display an auto ventilation operation state on the display 160.

The OS controller 200 may display, on the display 160, a pop-up message indicating that the auto ventilation is being activated when the temperature sensed by the thermistor 595 reaches a predetermined temperature condition. This is a function that the user may not cancel or change arbitrarily. Accordingly, the OS controller 200 may display information indicating that the auto ventilation operation is being performed on the display 160 and may also output a message indicating that the auto ventilation operation cannot be changed or cancelled. The user may not set a timer for this auto ventilation operation. The ventilation fan 590 is terminated when the auto ventilation has been terminated even though the user turns off the cooking appliance 1000 on the display 160.

In addition, the auto-ventilation may be executed when a timer is set. In this case, the OS controller 200 may display a remaining timer time on the display 160 when the auto-ventilation operation has been terminated. In addition, when the auto-ventilation operation ends and the timer time ends, the ventilation fan 590 is also turned off.

In one example, when the user starts to operate the ventilation fan 590 during the cooking, an operation intensity of the ventilation fan 590 may not be set to a turbo level (strong intensity). After the cooking has been finished, the ventilation fan 590 may operate in the turbo level as long as the previously set ventilation fan intensity is the turbo level.

As described above, the auto ventilation function refers to a function provided to protect components of the cooking appliance 1000. Accordingly, when an error occurs in a process in which the function controller 550 cooperates with the OS controller 200, the operations of other components of the functional unit 500 may be canceled, but the operation of the ventilation fan 590 executing the auto ventilation may be maintained. Similarly, even when there is no instruction from the OS controller 200, the function controller 550 may automatically start or end the operation of the ventilation fan 590 based on the temperature sensed by the thermistor 595.

When the command word recognition mode is started or the command word recognition enhancement mode is started, the OS controller 200 of the present invention may output a message indicating that the command word recognition mode or the command word recognition enhancement mode is activated on the display 160.

In addition, when a situation in which the command word is not recognized is repeated within a predetermined period after the wake-up word has been input, the OS controller 200 may display, on the display 160, the state that the command word is not recognized after the wake-up word has been recognized, thereby guiding the user to accurately utter the command word.

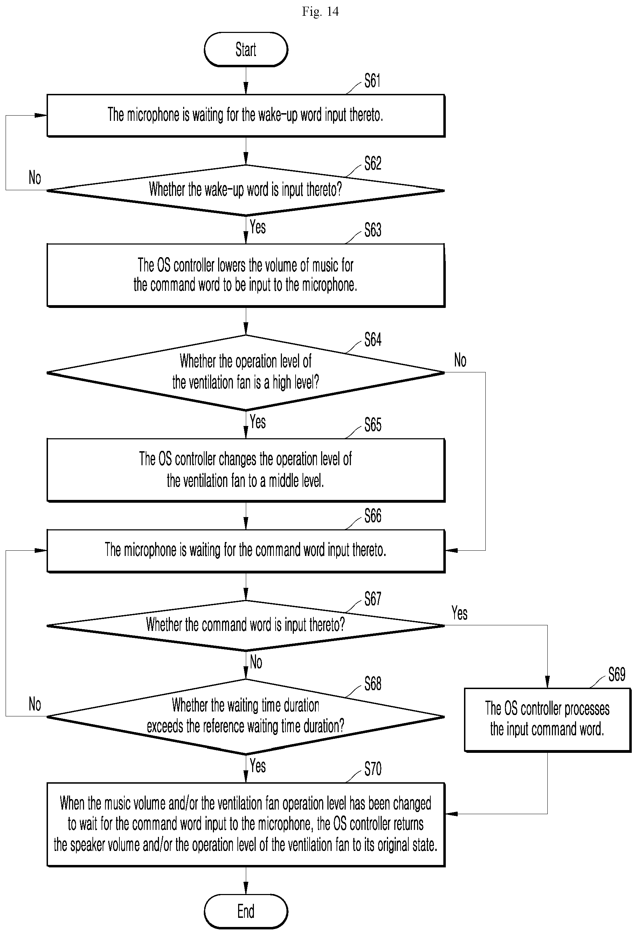

FIG. 14 is a diagram illustrating a process in which a cooking appliance including a digital controller performs voice recognition door according to another embodiment of the present invention. The ventilation fan 590 (for example, the hood fan) may operate at operation levels including off/low/middle/high.

The microphone 1320 disposed in the digital controller door 100 of the cooking appliance 1000 is in a state in which the microphone 1320 is waiting for the wake-up word input thereto in S61. When the wake-up word is input thereto in S62, the OS controller 200 of the digital controller door 100 lowers the volume of music being output through the speaker 1310 for the command word to be input to the microphone in S63.

When the operation level of the ventilation fan 590 is a high level in S64, the OS controller 200 changes the operation level of the ventilation fan 590 to a middle level in S65 in order to receive the command word. For example, the OS controller 200 may increase the accuracy of the command word recognition by adjusting the rotation speed rpm of the ventilation fan 590.

That is, in the embodiment of FIG. 14, the OS controller 200 of the digital controller door 100 may adjust the rpm of the ventilation fan in the voice recognition. While the microphone is waiting for the command word input thereto after the wake-up word (e.g., Hi LG) indicating being ready to listen to the command word has been input thereto in S66, the command word may be input thereto in S67.

The OS controller 200 processes the input command word in S69. When the music volume and/or the ventilation fan operation level has been changed to wait for the command word input to the microphone, the OS controller 200 returns the speaker volume and/or the operation level of the ventilation fan 590 to its original state in S70.

The OS controller 200 waits for a command word input to the microphone until the time duration for which the microphone is waiting for the command word input thereto in the S67 and the S68 exceeds a reference waiting time duration. In response to that the command word is not input and the waiting time duration exceeds the reference waiting time duration, the OS controller 200 performs the operation S70.

According to an embodiment of the present invention, when a voice command word has been input, the digital controller door 100 may perform a following process to detect the command word. When the wake-up word has been input during the operation of the microwave oven or the ventilation fan, the digital controller door 100 of the present invention lowers the music volume and lowers the rpm of the ventilation fan 590 to prepare for receiving the command word.

In addition, after recognizing the command word, the digital controller door 100 of the present invention returns the operation level of the ventilation fan 590 to the original rpm. After recognizing the wake-up word, the digital controller door waits for a predetermined time duration, and then, in response to a state where there is no command word input, returns the operation level of the ventilation fan 590 to the original state.

In the embodiment of FIG. 14, the digital controller door 100 may perform the control as shown in FIG. 14 only when the hood fan operates at the high level. When the wake-up word has been recognized, the digital controller door 100 may change the operation level of the hood fan from "high" to "middle". In one example, the reference ventilation fan operation level may be the middle level. In this case, in the embodiment of FIG. 14, when the ventilation fan 590 operates at a middle level, the rpm of the ventilation fan 590 may not be changed even though the wake-up word has been recognized. However, the present invention is not limited thereto.

The operation level of the hood fan or the ventilation fan may include a first level (low), a second level (middle), a third level (high), and a fourth level (turbo). In order to prevent a situation in which a command word cannot be input due to a surrounding sound in the command word input process, the OS controller 200 of the digital controller door 100 may temporarily lower the operation level of the hood fan or the ventilation fan in order to accurately receive the command word after the wake-up word has been input.

According to another embodiment of the present invention, in response to that the user utters a relatively loud sound or the pronunciation is correct, the OS controller 200 of the digital controller door 100 may determine that it is not necessary to temporarily lower the operation level of the hood fan or the ventilation fan and may not lower the operation level of the hood fan/ventilation fan.

According to still another embodiment of the present invention, in response to that the user utters a very small sound or the pronunciation is incorrect, the OS controller 200 of the digital controller door 100 may detect that the operation level of the hood fan or the ventilation fan is currently the second level and thus may temporarily lower the operation level of the hood fan or the ventilation fan to the first level.

That is, the OS controller 200 of the digital controller door 100 may temporarily change the operation level of the hood fan or the ventilation fan based on various voice recognition environments. When the operation level of the hood fan or the ventilation fan is set to 5 or greater levels, the digital controller door may store information on the maximum operation level of each of the fans and temporarily lower the operation level (rpm value) of each of the fans based on the stored information when the wake-up word has been input, thereby increasing the accuracy of the command word input.

The embodiment of FIG. 14 may also be applied to a process for controlling the door fan 180 in the voice recognition process.

FIG. 15 is a view illustrating a process of adjusting an operation level of a ventilation fan in a command word recognition mode according to an embodiment of the present invention. FIG. 15 shows an embodiment in which in the command word recognition mode, the OS controller 200 adjusts only the operation level of the ventilation fan 590 included in the functional unit 500.

Referring to the descriptions as set forth above with reference to FIG. 9, after the OS controller 200 starts the command word recognition mode in S11, the OS controller 200 checks whether the current operation level of the ventilation fan 590 is greater than the reference ventilation fan operation level VOC_VENT_LEVEL in order to improve the performance of the voice recognition in S16. The reference ventilation fan operation level VOC_VENT_LEVEL may be preset. Alternatively, as the number of voice recognitions accumulates, the OS controller 200 may set the reference ventilation fan operation level VOC_VENT_LEVEL to a new value.

In response to that the current operation level of the ventilation fan 590 is greater than the reference ventilation fan operation level VOC_VENT_LEVEL at S16 (S16-Yes), the OS controller 200 adjusts the operation level of the ventilation fan 590 to be lower than or equal to the reference ventilation fan operation level VOC_VENT_LEVEL in S17. In response to that the current operation level of the ventilation fan 590 is not greater than the reference ventilation fan operation level VOC_VENT_LEVEL at S16 (S16-No), the process may be terminated.

FIG. 16 is a diagram illustrating a process of adjusting an operation level of a door fan in a command word recognition mode according to an embodiment of the present invention. FIG. 16 shows an embodiment in which in the command word recognition mode, the OS controller 200 adjusts only the operation level of the door fan 180 included in the digital controller door 100.

Referring to the descriptions as set forth above with reference to FIG. 9, after the OS controller 200 starts the command word recognition mode in S11, the OS controller 200 checks whether the current operation level of the door fan 180 is greater than the reference door fan operation level VOC_DOOR_LEVEL in order to improve the performance of voice recognition in S14. The reference door fan operation level VOC_DOOR_LEVEL may be preset. Alternatively, as the number of voice recognitions accumulates, the OS controller 200 may set the reference door fan operation level VOC_DOOR_LEVEL to a new value.

In response to that the current operation level of the door fan 180 is greater than the reference door fan operation level VOC_DOOR_LEVEL at S14 (S14-Yes), the OS controller 200 adjusts the operation level of the door fan 180 to be lower than or equal to the reference door fan operation level VOC_DOOR_LEVEL in S15. In response to that the current operation level of the door fan 180 is not greater than the reference door fan operation level VOC_DOOR_LEVEL at S14 (S14-No), the process may be terminated.

In addition, in starting the command word recognition mode, the operation level of the ventilation fan 590 or the operation level of the door fan 180 is allowed to be changed based on the importance level of voice recognition. For example, in a situation where a high temperature or a lot of smoke is generated during the cooking process, the operation of the ventilation fan 590 should be preferentially performed. In addition, when the temperature of the digital controller door 100 is increased due to various factors, the door fan 180 should also be operated.

In this case, the OS controller 200 may determine the operation level of the ventilation fan 590 or the door fan 180 based on a comparing result between the current detected state and the importance level of voice recognition.

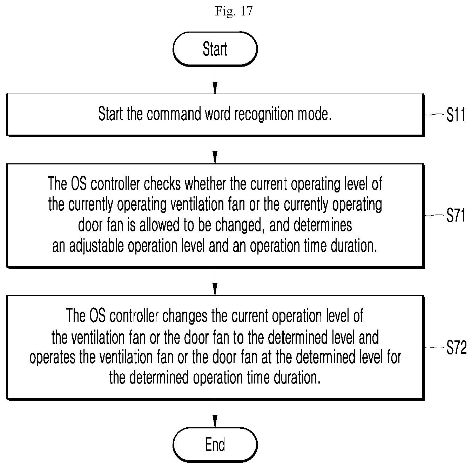

FIG. 17 is a view illustrating a process of controlling an operation level of a door fan/ventilation fan according to an embodiment of the present invention.

When the command word recognition mode is started in S11, the OS controller 200 checks whether the current operating level of the currently operating ventilation fan 590 or the currently operating door fan 180 is allowed to be changed in S71. In order to determine whether the operation level is allowed to be changed, the OS controller 200 may determine whether the current state of the cooking appliance 1000 is in an overheated state, a state of generating smoke, or a state of the digital controller door 100 is in an overheated state.

In response to that the smoke is generated or the cooking appliance is excessively overheated (for example, the smoke level is comparable with a smoke level in the cooktop or the overheated state is comparable with a boiled state of the food in the cooktop), the ventilation fan 590 should maintain the maximum operating level thereof. Alternatively, the operating level of the ventilation fan 590 may be lowered only by one level for a very short time.

Likewise, in response to that the internal components of the digital controller door 100 are overheated, the door fan 180 should maintain the maximum operating level thereof. Alternatively, the operation level of the door fan 180 may be lowered only by one level for a very short time.

Accordingly, the OS controller 200 determines an adjustable operation level and adjustable operation time duration in S71. The OS controller 200 determines an operation level to which the current operation level of the ventilation fan 590 or the door fan 180 is allowed to be changed and an operation time duration to which a current operation time duration thereof is allowed to be changed in S71.

For example, based on the current cooking state of the cooking appliance 1000, the OS controller 200 may determine to lower the operation level of the ventilation fan 590 by one level for a predetermined time duration (e.g., 3 seconds).

Alternatively, in response to the overheated state of the digital controller door 100, the OS controller 200 may determine to lower the operation level of the door fan 180 by two levels for a predetermined time duration (e.g., 5 seconds).

The OS controller 200 changes the current operation level of the ventilation fan 590 or the door fan 180 to the determined level and operates the ventilation fan 590 or the door fan 180 at the determined level for the determined operation time duration in S72.

After the determined operation time duration has elapsed, the OS controller 200 returns the determined operation level of the ventilation fan 590 or the door fan 180 to a previous level before the change thereof.

In response to that due to the current cooking state of the cooking appliance 1000 or the overheated state of the digital controller door 100, the current operating level of the ventilation fan 590 or the door fan 180 is not allowed to be changed, the OS controller 200 may output a guide message "Please speak loudly" through the speaker/microphone 130. Alternatively, a guide message "Please speak loudly because the operating level of the fan is not allowed to be lowered" may be displayed on the display 160.

The OS controller 200 determines an operation level to which the current operation level of the ventilation fan 590 is allowed to be changed and an operation time duration to which a current operation time duration thereof is allowed to be changed, based on the operation state of the functional unit 500. Then, the OS controller 200 changes the current operation level of the ventilation fan 590 to the determined level (adjustable level) and operates the ventilation fan 590 at the determined level for the determined operation time duration.

In one example, the OS controller 200 determines an operation level to which the current operation level of the ventilation fan 590 is allowed to be changed and an operation time duration to which a current operation time duration thereof is allowed to be changed, based on the overheated state, smoke, high temperature, etc. of the functional unit 500. Then, the OS controller 200 changes the current operation time duration of the ventilation fan 590 to the determined time duration (adjustable time duration) and operates the ventilation fan 590 at the determined time duration at the determined operation level(adjustable level).

The OS controller 200 determines an operation level to which the current operation level of the door fan 180 is allowed to be changed and an operation time duration to which a current operation time duration thereof is allowed to be changed, based on the operation state of the digital controller door 100. Then, the OS controller 200 changes the current operation level of the door fan 180 to the determined level (adjustable level) and operates the door fan 180 at the determined level for the determined operation time duration.

In one example, the OS controller 200 determines an operation level to which the current operation level of the door fan 180 is allowed to be changed and an operation time duration to which a current operation time duration thereof is allowed to be changed, based on the overheated state, high temperature, etc. of the digital controller door 100. Then, the OS controller 200 changes the current operation time duration of the door fan 180 to the determined time duration (adjustable time duration) and operates the door fan 180 at the determined time duration at the determined operation level(adjustable level).

In addition, when the period of the voice recognition is extended in a situation where the current operating level of the ventilation fan 590 or the door fan 180 is not allowed to be lowered (for example, in a conversation with a chatbot or a generative AI, a video call, etc.), the OS controller 200 may display the conversation contents as a subtitle on the display 160.

A cooking appliance according to an embodiment of the present invention includes: a functional unit including a cavity for receiving food, and one or more functional components, the functional unit being configured to provide a cooking function, a digital controller door coupled to the functional unit, the digital controller door including a display configured to provide a user interface, and one or more door-mounted components including a microphone and a controller configured to in response to receiving a wake-up word, execute a command word recognition mode for receiving a command word for a predetermined amount of time, wherein the command word recognition mode includes adjusting an operation level of at least component among of the one or more functional components of the functional unit or the one or more door-mounted components of the digital controller door.

A method of controlling a cooking appliance according to an embodiment of the present invention includes: displaying a user interface by a display of a digital controller door coupled to a functional unit of the cooking appliance, the functional unit including a cavity for receiving food and one or more functional components, and the digital controller door including one or more door-mounted components including a microphone; and in response to receiving a wake-up word, executing, by a controller of the cooking appliance, a command word recognition mode for receiving a command word for a predetermined amount of time, wherein the command word recognition mode includes adjusting an operation level of at least component among of the one or more functional components of the functional unit or the one or more door-mounted components of the digital controller door.

An embodiment of the present invention in which all the components are combined with each other or operate in combination with each other has been described. However, the present invention is not necessarily limited to this embodiment. Within the scope of the purpose of the present invention, at least two of all components may be selectively combined with other or may operate in the selectively combined manner with other. Furthermore, each of the components may be implemented as an independent hardware. However, some or all of the components may be selectively combined with each other and thus may be implemented using a computer program with a program module to perform some or all of the functions combined in one or more pieces of hardware. The codes and code segments that constitute the computer program may be easily deduced by a person skilled in the art from the present invention. The computer program may be stored in computer readable media and read and executed by a computer, thereby implementing the method of the present invention. The storage media for storing the computer program may include storage media including magnetic recording media, optical recording media, and semiconductor recording devices. Additionally, the computer program implementing an embodiment of the present invention includes a program module transmitted in real time duration through an external device.

Although the embodiments of the present invention have been described in more detail with reference to the accompanying drawings, the present invention is not necessarily limited to these embodiments, and may be modified in a various manner within the scope of the technical scope of the present invention. Accordingly, the embodiments as disclosed in the present invention are intended to describe rather than limit the technical idea of the present invention, and the scope of the technical idea of the present invention is not limited by these embodiments. Therefore, it should be understood that the embodiments described above are not restrictive but illustrative in all respects. In addition, even though an effect of a configuration of the present invention is not explicitly described in describing the embodiment of the present invention above, it is obvious that the predictable effect from the configuration should be recognized.

### -Explanation of reference numerals-

| | | | |
|---|---|---|---|
| 100: | digital controller door | 200: | OS controller |
| 500: | functional unit | 550: | function controller |
| 1000: | cooking appliance | | |

## Claims

1. A cooking appliance (1000) including a digital controller door (100), the cooking appliance (1000) comprising: a functional unit (500) configured to provide a cooking function; wherein the digital controller door (100) includes:
a microphone (130) for receiving a user's voice, and a controller (200) for controlling a plurality of components of the cooking appliance (1000);
wherein in response to that the microphone (130) has received a wake-up word, the controller (200) is configured to perform a command word recognition mode to receive a command word for a preset time duration.

2. The cooking appliance (1000) of claim 1, wherein the controller (200) is configured to adjust an operation level of a ventilation fan (590) included in the functional unit (500) in the command word recognition mode.

3. The cooking appliance (1000) of claim 2, wherein the controller (200) is configured to:
determine an operation level to which a current operation level of the ventilation fan (590) is allowed to be changed, and an operation time duration to which a current operation time duration thereof is allowed to be changed, based on an operating state of the functional unit (500); and
change the current operation level of the ventilation fan (590) to the determined level and operate the ventilation fan (590) at the determined level for the determined operation time duration.

4. The cooking appliance (1000) of any one of claims 1 to 3, wherein the controller (200) is configured to adjust an operation level of a door fan (180) included in the digital controller door (100) in the command word recognition mode.

5. The cooking appliance (1000) of claim 4, wherein the controller (200) is configured to:
determine an operation level to which a current operation level of the door fan (180) is allowed to be changed, and an operation time duration to which a current operation time duration thereof is allowed to be changed, based on an operating state of the digital controller door; and
change the current operation level of the door fan (180) to the determined level and operate the ventilation fan (590) at the determined level for the determined operation time duration.

6. The cooking appliance (1000) of any one of claims 1 to 5, wherein the command word recognition mode is performed based on a reference volume for a sound output unit included in the cooking appliance (1000),
wherein the controller (200) is configured to lower the reference volume, based on a volume and/or a frequency band of voice data including the wake-up word or the command word.

7. The cooking appliance (1000) of claims 4 to 6, wherein the controller (200) is configured to lower a reference door fan operation level or a reference ventilation fan operation level, based on a volume and/or a frequency band of voice data including the wake-up word or the command word.

8. The cooking appliance (1000) of any one of claims 1 to 7, wherein in response to that the command word is not recognized within the preset time duration, and subsequently, the wake-up word is input within the preset time duration, the controller (200) is configured to perform a command word recognition enhancement mode,
wherein a noise level generated by the cooking appliance (1000) in the command word recognition mode is greater than a noise level generated by the cooking appliance (1000) in the command word recognition enhancement mode.

9. A method for controlling a cooking appliance (1000) including a digital controller door (100), the cooking appliance (1000) comprising: a functional unit (500) configured to provide a cooking function, a controller (200) for controlling a plurality of components of the cooking appliance (1000),
wherein the digital controller door (100) includes a microphone (130) for receiving a user's voice,
wherein the method comprises:
receiving, by the microphone (130), a wake-up word; and
performing, by the controller (200), a command word recognition mode to receive a command word for a preset time duration, thereby improving voice recognition performance.

10. The method of claim 9, wherein the performing of the command word recognition mode includes, adjusting, by the controller (200), an operation level of a ventilation fan (590) included in the functional unit (500) in the command word recognition mode.

11. The method of claim 10, wherein the adjusting of the operation level includes:
determining, by the controller (200), an operation level to which a current operation level of the ventilation fan (590) is allowed to be changed, and an operation time duration to which a current operation time duration thereof is allowed to be changed, based on an operating state of the functional unit; and
changing, by the controller (200), the current operation level of the ventilation fan (590) to the determined level and operating, by the controller, the ventilation fan (590) at the determined level for the determined operation time duration.

12. The method of any one of claims 9 to 11, wherein the performing of the command word recognition mode includes, adjusting, by the controller (200), an operation level of a door fan (180) included in the digital controller door (100) in the command word recognition mode.

13. The method of claim 12, wherein the adjusting of the operation level includes:
determining, by the controller (200), an operation level to which a current operation level of the door fan is allowed to be changed, and an operation time duration to which a current operation time duration thereof is allowed to be changed, based on an operating state of the digital controller door; and
changing, by the controller (200), the current operation level of the door fan (180) to the determined level and operating, by the controller (200), the ventilation fan (590) at the determined level for the determined operation time duration.

14. The method of any one of claims 9 to 13, wherein the command word recognition mode is performed based on a reference volume for a sound output unit included in the cooking appliance (1000),
wherein the performing of the command word recognition mode includes lowering, by the controller (200), the reference volume, based on a volume and/or a frequency band of voice data including the wake-up word or the command word.

15. The method of any one of claims 9 to 14, wherein the method further comprises:
in response to that the command word is not recognized within the preset time duration, and subsequently, the wake-up word is input within the preset time duration, performing, by the controller (200), a command word recognition enhancement mode,
wherein a noise level generated by the cooking appliance (1000) in the command word recognition mode is greater than a noise level generated by the cooking appliance (1000) in the command word recognition enhancement mode.
